# EUROPEAN PATENT APPLICATION

(11) **EP 4 764 773 A1**
(43) Date of publication of application: **24.06.2026**
(21) Application number: 24913226.7
(22) Date of filing: 04.11.2024
(51) Int. Cl.: G06F 1/16

(54) **SLIDABLE ELECTRONIC DEVICE**

(30) Priority: 27.12.2023 KR 20230193364; 10.01.2024 KR 20240004331
(71) Applicant: Samsung Electronics Co., Ltd., Suwon-si, Gyeonggi-do 16677 (KR)
(72) Inventor: KIM, Kyungpil, Suwon-si Gyeonggi-do 16677 (KR)
(74) Representative: Appleyard Lees IP LLP
(86) International application number: PCT/KR2024/017190
(87) International publication number: WO 2025/143512

(57) **Abstract**

A slidable electronic device is provided. The slidable device includes a housing including a second housing and a first housing, a display coupled to the first housing and the second housing such that a size of an area of the display visible from a front side of the housing varies as the housing moves between a retracted position and an extended position, a display cover disposed to cover at least a portion of one edge of the display, at least one of a first case disposed on one side of the housing or a second case disposed on an opposite side of the housing, and the display cover is at least partially covered by the first case or the second case in the retracted position and is at least partially exposed in the extended position.

## Description

### BACKGROUND

### 1. Field

The disclosure relates to a slidable electronic device.

### 2. Description of Related Art

A portable electronic device such as a smartphone may provide various functions as well as a call function based on various types of applications. In the process of providing the various functions, the portable electronic device may output a screen corresponding to each function. A user may want to use a wider screen when using the various functions. When the size of a display device is increased for screen display in a general portable electronic device, the overall size may be increased, and therefore portability may be reduced. Accordingly, a portable electronic device capable of increasing the size of a screen while maintaining portability is being developed.

### SUMMARY

In accordance with an aspect of the disclosure, an electronic device is provided. The electronic device includes a housing including a first housing and a second housing configured to movably engage with the first housing between a retracted position and an extended position, a display coupled to the first housing and the second housing such that a size of an area of the display visible from a front side of the housing varies as the housing moves between the retracted position and the extended position, the display including an extended portion exposed in the extended position and covered in the retracted position and a fixed portion connected to the extended portion and fixedly exposed, a display cover coupled with the first housing and disposed to cover at least a portion of one edge of the display, and a first case disposed on one side of the housing, wherein in the retracted position, at least a portion of the display cover is covered by the first case, and in the extended position, the at least a portion of the display cover covered by the first case is exposed. The display includes an extended portion exposed in the extended position and covered in the retracted position and a fixed portion connected to the extended portion and fixedly exposed.

### BRIEF DESCRIPTION OF THE DRAWINGS

FIG. 1 is a block diagram illustrating an electronic device in a network environment according to an embodiment of the disclosure;
FIG. 2 is a view illustrating a first state and a second state of an electronic device according to an embodiment of the disclosure;
FIG. 3 is an exploded perspective view illustrating an electronic device according to an embodiment of the disclosure;
FIG. 4 is a view illustrating a portion of an electronic device in an extended position according to an embodiment of the disclosure;
FIG. 5 is a view illustrating a portion of an electronic device in the extended position according to an embodiment of the disclosure;
FIG. 6 is a view illustrating an assembly method of an electronic device according to an embodiment of the disclosure;
FIG. 7 is a view illustrating forming a structure of a first-type first housing according to an embodiment of the disclosure;
FIG. 8 is a view illustrating a structure of a second-type first housing and a second display cover of an electronic device according to an embodiment of the disclosure;
FIG. 9 is a view illustrating a structure of a third-type first housing and a third display cover of an electronic device according to an embodiment of the disclosure;
FIG. 10 is a view illustrating an assembly method of an electronic device including a third-type first housing according to an embodiment of the disclosure;
FIG. 11 is a view related to a display protection function in an extended position of an electronic device according to an embodiment of the disclosure; and
FIG. 12 is a view related to a display protection function in a retracted position of an electronic device according to an embodiment of the disclosure;.

### DETAILED DESCRIPTION

Hereinafter, various embodiments of the disclosure will be described with reference to the accompanying drawings.

An embodiment of the disclosure to be described below provides an electronic device capable of preventing at least a portion of a display from being exposed and damaged when the electronic device (e.g., a slidable electronic device or a rollable electronic device) is in an extended position. For example, in the electronic device of the disclosure, a display cover may be disposed on one side of a first housing (or, a moving housing, a slide plate, a slide housing, a slide bracket, or a slide frame) that moves relative to a first housing (or, a fixed housing) and may protect the edge of the display exposed in the extended position, and in this process, the display cover may be fastened to the first housing without using bonding or screw coupling. Thus, material costs may be reduced, and damage or deformation of the display may be improved.

According to an embodiment of the disclosure, the electronic device of the disclosure may provide a second housing (or, a moving housing, a slide plate, a slide housing, a slide bracket, or a slide frame) seated on a first housing (or, a fixed housing, a fixed plate, a fixed bracket, or a fixed frame), a display cover (or, a cover structure, a support structure, a slide cover, or a mold structure), a first case, and a second case (or, a second front deco) in an extended position or a retracted position. Accordingly, the electronic device of the disclosure may improve or prevent the occurrence of stabbed marks (or, dents or damages) on the display by the display cover, the cases, and the housing structures while pressure is applied from the outside (e.g., while pressing is caused by fingers or other objects).

Objects according to various embodiments of the disclosure will be mentioned as needed in the process of describing the embodiments.

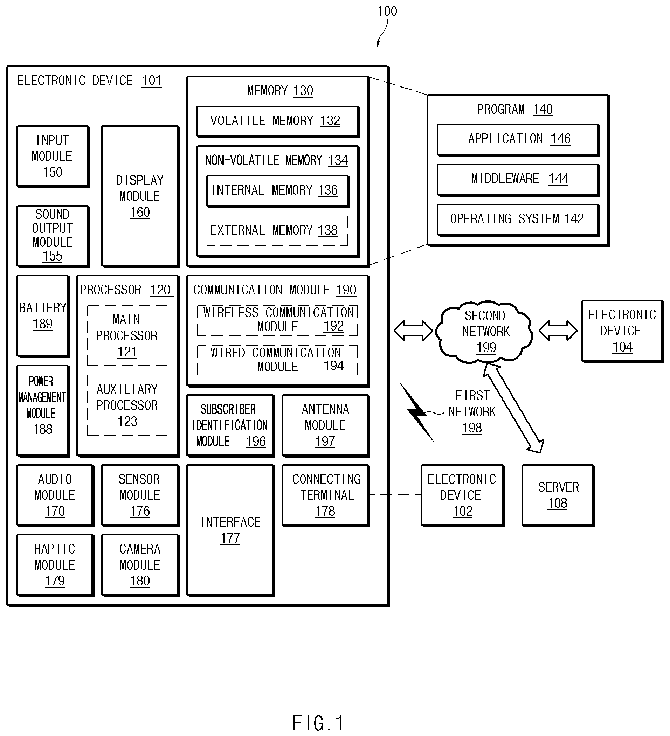

FIG. 1 is a block diagram illustrating an electronic device in a network environment according to an embodiment of the disclosure.

Referring to FIG. 1, an electronic device 101 in a network environment 100 may communicate with an external electronic device 102 via a first network 198 (e.g., a short-range wireless communication network), or at least one of an external electronic device 104 or a server 108 via a second network 199 (e.g., a long-range wireless communication network). According to an embodiment of the disclosure, the electronic device 101 may communicate with the external electronic device 104 via the server 108. According to an embodiment of the disclosure, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments of the disclosure, at least one of the components (e.g., the connecting terminal 178) may be omitted from the electronic device 101, or one or more other components may be added in the electronic device 101. In some embodiments of the disclosure, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment of the disclosure, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment of the disclosure, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., a sleep) state, or together with the main processor 121 while the main processor 121 is in an active state (e.g., executing an application). According to an embodiment of the disclosure, the auxiliary processor 123 (e.g., an image signal processor or a communication processor) may be implemented as part of another component (e.g., the camera module 180 or the communication module 190) functionally related to the auxiliary processor 123. According to an embodiment of the disclosure, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment of the disclosure, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment of the disclosure, the display module 160 may include a touch sensor adapted to detect a touch, or a pressure sensor adapted to measure the intensity of force incurred by the touch.

The audio module 170 may convert a sound into an electrical signal and vice versa. According to an embodiment of the disclosure, the audio module 170 may obtain the sound via the input module 150, or output the sound via the sound output module 155 or a headphone of an external electronic device (e.g., the external electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment of the disclosure, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the external electronic device 102) directly (e.g., wiredly) or wirelessly. According to an embodiment of the disclosure, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the external electronic device 102). According to an embodiment of the disclosure, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment of the disclosure, the haptic module 179 may include, for example, a motor, a piezoelectric element, or an electric stimulator.

The camera module 180 may capture a still image or moving images. According to an embodiment of the disclosure, the camera module 180 may include one or more lenses, image sensors, image signal processors, or flashes.

The power management module 188 may manage power supplied to the electronic device 101. According to one embodiment of the disclosure, the power management module 188 may be implemented as at least part of, for example, a power management integrated circuit (PMIC).

The battery 189 may supply power to at least one component of the electronic device 101. According to an embodiment of the disclosure, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the external electronic device 102, the external electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment of the disclosure, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a fifth generation (5G) network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a fourth generation (4G) network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the millimeter wave (mmWave) band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the external electronic device 104), or a network system (e.g., the second network 199). According to an embodiment of the disclosure, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment of the disclosure, the antenna module 197 may include an antenna including a radiating element composed of a conductive material or a conductive pattern formed in or on a substrate (e.g., a printed circuit board (PCB)). According to an embodiment of the disclosure, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment of the disclosure, another component (e.g., a radio frequency integrated circuit (RFIC)) other than the radiating element may be additionally formed as part of the antenna module 197.

According to various embodiments of the disclosure, the antenna module 197 may form a mmWave antenna module. According to an embodiment of the disclosure, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment of the disclosure, commands or data may be transmitted or received between the electronic device 101 and the external electronic device 104 via the server 108 coupled with the second network 199. Each of the external electronic devices 102 or 104 may be a device of a same type as, or a different type, from the electronic device 101. According to an embodiment of the disclosure, all or some of operations to be executed at the electronic device 101 may be executed at one or more of the external electronic devices 102 or 104, or the server 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment of the disclosure, the external electronic device 104 may include an internet-of-things (IoT) device. The server 108 may be an intelligent server using machine learning and/or a neural network. According to an embodiment of the disclosure, the external electronic device 104 or the server 108 may be included in the second network 199. The electronic device 101 may be applied to intelligent services (e.g., a smart home, a smart city, a smart car, or healthcare) based on 5G communication technology or IoT-related technology.

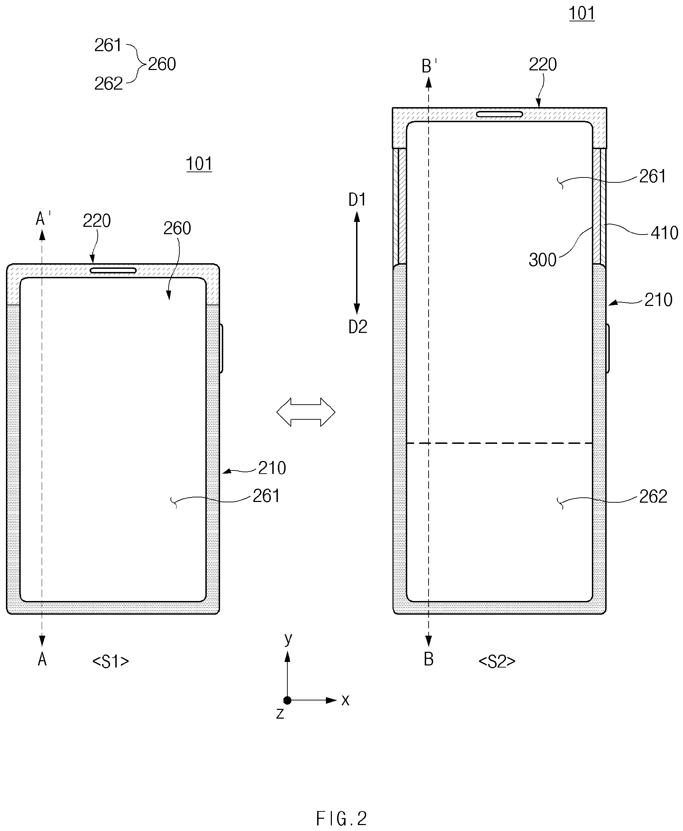

FIG. 2 is a view illustrating a first state and a second state of an electronic device according to an embodiment of the disclosure.

Referring to FIG. 2, the electronic device 101 according to an embodiment of the disclosure may include a first case 210 (or, a basic housing, a basic structure, a basic case, a basic frame, or a main body), a second case 220 (or, referred to as at least one of a front housing, a front deco, or a front frame), a first-type first housing 410 (or, referred to as at least one of a first housing, a moving housing, a slide plate, a slide housing, a slide structure, a slide case, a slide body, a slide frame, a slide bracket, or a first frame), a first-type display cover 300 (or, referred to as at least one of a slide cover, a cover structure, a support structure, a display side cover, or a cover), and a display 260 (or, a display assembly to be described below). At least a portion of the first-type display cover 300 may be formed of a moldable material. For example, the first-type display cover 300 may be formed of a metallic material such as aluminum, SUS, or MIM (a material including SUS powder and a binder).

The electronic device 101 may include two first-type display covers 300 (e.g., a first display cover and a second display cover or a first-type first display cover and a first-type second display cover) to protect the left and right sides of the display 260, but the disclosure is not limited thereto. For example, the electronic device 101 may include only one first-type display cover.

In an embodiment of the disclosure, the electronic device 101 may be a slidable or rollable electronic device, and the state of the electronic device 101 may be changed by the movement of the second case 220 relative to the first case 210 (or, the movement of the first case 210 relative to the second case 220 depending on a point of view). For example, the state of the electronic device 101 may include the first state S1 (e.g., a retracted position, a closed mode, a retraction mode, a slide-in mode, or a minimum size mode) and the second state S2 (e.g., an extended position, an open mode, an extension mode, a slide-out mode, or a maximum size mode). The first state S1 and the second state S2 of the electronic device 101 may be determined depending on the position of the second case 220 relative to the first case 210. The electronic device 101 may be changeable (or, switchable) between the first state S1 and the second state S2 by a user operation or a mechanical operation (e.g., a motor).

In an embodiment of the disclosure, the first state S1 may mean a state in which the area (or, size) of the exposed area of the display 260 that is exposed on the front side (e.g., the side facing in the +Z-axis direction) of the electronic device 101 or forms the front side of the electronic device 101 is relatively reduced when compared to that in the extended position. The second state S2 may mean a state in which the area (or, size) of the exposed area of the display 260 that is exposed on the front side of the electronic device 101 or forms the front side of the electronic device 101 is relatively extended when compared to that in the retracted position. For example, the first state S1 may mean a state in which the exposed area of the display 260 visually exposed on the front side of the electronic device 101 has a minimum size, and the second state S2 may mean a state in which the exposed area of the display 260 visually exposed on the front side of the electronic device 101 has a maximum size. Although not illustrated, the state of the electronic device 101 may further include at least one intermediate state (e.g., a partially extended state or a partially open state) that is defined as a state between the first state S1 and the second state S2. For example, the at least one intermediate state may mean one or more states in which the size of the exposed area of the display 260 is larger than that in the first state S1 and smaller than that in the second state S2.

In an embodiment of the disclosure, the first case 210 and the second case 220 may be disposed (or, coupled) to slide relative to each other. The second case 220 may be slidably disposed on (or, coupled to) one side of the first case 210. For example, the first case 210 may be a relatively fixed structure, and the second case 220 may be a structure that is movable relative to the first case 210. The second case 220 may be coupled to the one side of the first case 210 to slide relative to the first case 210 in opposite directions D1 and D2 (e.g., the +Y/-Y-axis directions).

In an embodiment of the disclosure, the second case 220 may slide relative to the first case 210 to change the state of the electronic device. For example, the electronic device 101 may be changed from the first state S1 to the second state S2 as the second case 220 moves relative to the first case 210 in the first direction D1. In contrast, the electronic device 101 may be changed from the second state S2 to the first state S1 as the second case 220 moves relative to the first case 210 in the second direction D2 opposite to the first direction D1.

In an embodiment of the disclosure, the size of the exposed area of the display 260 visually exposed on the front side of the electronic device 101 may be changed in response to a sliding operation of the second case 220 (or, the first-type first housing 410). The display 260 may be configured such that the area exposed on the front side of the electronic device 101 is extended or retracted as at least a portion of the display 260 rotates or linearly moves depending on the sliding operation of the second case 220 (or, the first-type first housing 410) in a state in which the display 260 is supported by other components of the electronic device 101. The display 260 may include at least a partially flexible portion. For example, the display 260 may be a flexible display.

In an embodiment of the disclosure, the display 260 may include a first screen area 261 and a second screen area 262 extending from the first screen area 261. The first screen area 261 may form the front side of the electronic device 101. For example, the first screen area 261 may remain visually exposed on the front side of the electronic device 101 irrespective of the state of the electronic device 101. The second screen area 262 may form the front side of the electronic device 101 in a state in which the size of the electronic device 101 is extended when compared to that in the first state S1. For example, whether the second screen area 262 is exposed on the front side of the electronic device 101 may be determined in response to the state of the electronic device 101. As the second case 220 (or, the first-type first housing 410) moves, the second screen area 262 may be moved (or, inserted or received (e.g., slide-in)) into the first case 210 or may be moved (or, withdrawn or exposed (e.g., slide-out)) out of the first case 210.

In an embodiment of the disclosure, the area by which the second screen area 262 is exposed on the front side of the electronic device 101 may vary depending on the position of the second case 220 relative to the first case 210. For example, the size of the second screen area 262 exposed on the front side of the electronic device 101 may be gradually increased as the second case 220 (or, the first-type first housing 410) moves in the first direction D1 in the first state S1. The exposed area of the second screen area 262 may be increased with an increase in the distance by which the second case 220 moves in the first direction D1 in the first state S1. In an embodiment of the disclosure, the first screen area 261 may be understood as a basic area, a fixed area, or a main area, and the second screen area 262 may be understood as an extended area, a variable area, or a sub-area.

In an embodiment of the disclosure, the second screen area 262 may extend from the first screen area 261 in one direction. For example, the direction in which the second screen area 262 extends from the first screen area 261 may be substantially different from the direction (e.g., the first direction D1) in which the second case 220 moves when the electronic device 101 is extended. For example, the second screen area 262 may extend from the first screen area 261 in the second direction D2. As the second case 220 slides relative to the first case 210, the second screen area 262 may be inserted into the first case 210 (e.g., slide-in operation) or may be withdrawn out of the first case 210 (e.g., slide-out operation).

In an embodiment of the disclosure, the first screen area 261 and the second screen area 262 of the display 260 may be distinguished from each other based on whether the first screen area 261 and the second screen area 262 are exposed on the front side of the electronic device 101 in the first state S1. For example, the first screen area 261 may mean a portion of the entire area of the display 260 that is visually exposed on the front side of the electronic device 101 in the first state S1. When the electronic device 101 is in the first state S1, the second screen area 262 of the display 260 may be located inside the first case 210 and therefore may not be exposed on the front side of the electronic device 101, and when the electronic device 101 is changed from the first state S1 to the second state S2, at least a portion of the second screen area 262 may be withdrawn out of the first case 210 and may be visually exposed on the front side of the electronic device 101. For example, the second screen area 262 may be understood as referring to the remaining area of the display 260 other than the first screen area 261. In an embodiment disclosed in the disclosure, the first screen area 261 and the second screen area 262 of the display 260 are not areas physically distinguished from each other and do not mean that the shapes or properties thereof are different from each other.

In an embodiment of the disclosure, the first state S1 may be a state in which the front side of the electronic device 101 is formed by the first screen area 261 and the second screen area 262 is located inside the first case 210. The second state S2 may be a state in which the front side of the electronic device 101 is formed by at least a portion of the second screen area 262 and the first screen area 261. For example, the second state S2 may mean a state in which the area of the second screen area 262 exposed on the front side of the electronic device 101 is maximum. Although not illustrated, one or more intermediate states between the first state S1 and the second state S2 may mean a state in which the area of the second screen area 262 exposed on the front side of the electronic device 101 is smaller than that in the second state.

In an embodiment of the disclosure, the display 260 may form a screen display area that is visually exposed on the front side of the electronic device 101 and on which certain visual information (or, a screen) is displayed. For example, in the first state S1, the screen display area may be formed by the first screen area 261. In the second state S2, the screen display area may be formed by a portion of the second screen area 262 and the first screen area 261. In the second state S2, the electronic device 101 may provide a screen display area extended when compared to that in the first state S1. For example, the screen display area may be substantially the same as, or smaller than, the exposed area of the display 260.

In an embodiment of the disclosure, in the first state S1, one side (e.g., the end in the +Y-axis direction) of the first case 210 and one side (e.g., the end in the -Y-axis direction) of the second case 220 may be disposed to face each other. Alternatively, in the first state S1, the one side (e.g., the end in the +Y-axis direction) of the first case 210 and the one side (e.g., the end in the -Y-axis direction) of the second case 220 may be in contact with each other or may be adjacent to each other at an interval less than a predefined first interval (e.g., several um to several mm). In the second state S2, the one side (e.g., the end in the +Y-axis direction) of the first case 210 and the one side (e.g., the end in the -Y-axis direction) of the second case 220 may be spaced apart from each other at a predefined interval or more while facing each other. Alternatively, in the second state S2, the one side (e.g., the end in the +Y-axis direction) of the first case 210 and the one side (e.g., the end in the -Y-axis direction) of the second case 220 may be in contact with each other or may be spaced apart from each other at a predefined second interval (e.g., an interval greater than the first interval or an interval of several mm to several cm or more). In the second state S2, at least a portion of the first housing 410 and at least a portion of the first-type display cover 300 fastened to the first housing 410 may be exposed to the outside between the first case 210 and the second case 220. The first-type display cover 300 may be disposed such that one side is fixed to the first-type first housing 410 and an opposite side covers at least a portion of an edge (e.g., at least one of the X-axis edge or the -X-axis edge) of the display 260 based on when observed in the Z-axis direction. Based on the above-described structure, in the second state S2 (e.g., in the extended position), the electronic device 101 of the disclosure may prevent (or, improve) at least one of damage or dust ingress to at least a portion of opposite sides of the display 260.

The structure of the electronic device 101 to be described below may correspond to an example of the electronic device 101 in which the area of the screen display area is variable, and the electronic device 101 whose screen display area is variable may be implemented in various ways other than the structure disclosed in the disclosure. The term "state" used herein may be understood as referring to at least one of an operation of the electronic device 101, a structural form or shape of the display, or an arrangement relationship between one structure and another structure of the electronic device.

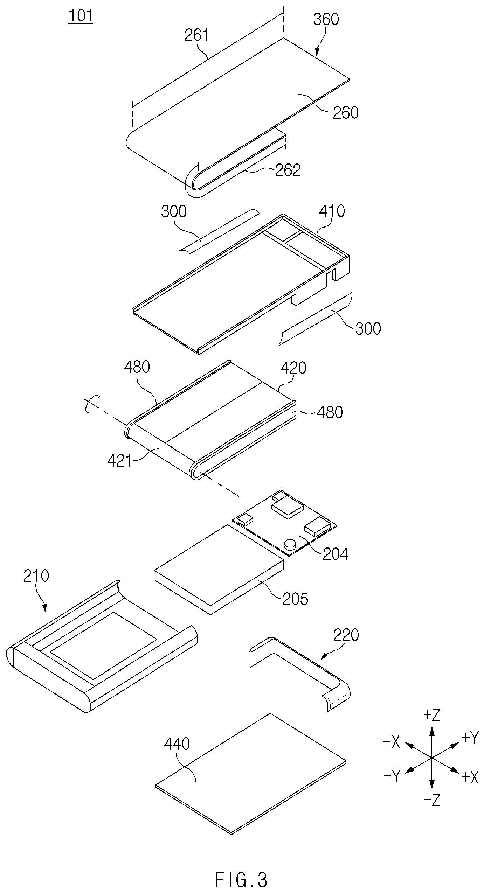

FIG. 3 is an exploded perspective view illustrating an electronic device according to an embodiment of the disclosure.

Referring to FIGS. 2 and 3, the electronic device 101 according to an embodiment may include the first case 210, the second case 220, a display assembly 360, side members 480, the first-type first housing 410, a second housing 420 (a second frame, a fixed plate, a fixed housing, a fixed frame, or a fixed bracket)(Alternatively, when the first type first housing 410 acts as a fixed housing, the second housing 420 may be referred to as a movable housing, or reference number 410 may be defined as the second housing, and reference number 420 may be defined as the first type first housing.), the first-type display covers 300 (or, the first display cover and the second display cover), and a rear cover 440 (or, a back cover). For example, the electronic device 101 may be a rollable electronic device or a slidable electronic device.

The first case 210 may form at least a portion of the exterior of the electronic device 101. The first case 210 may provide a space in which various electronic components are disposed. The second case 220 may be slidably connected to the first case 210. For example, the second case 220 may be moved from the first case 210 in the +Y-axis direction or may be moved (or, inserted) into the first case 210 in the -Y-axis direction. However, this is illustrative, and the direction in which the second case 220 is moved (e.g., inserted or withdrawn) is not limited thereto. For example, the second case 220 may be moved from the first case 210 in the +X-axis direction may be moved to the first case 210 in the -X-axis direction, and the display 260 may be configured to be extended in the width direction of the electronic device 101 (e.g., in the X-axis direction) (e.g., in the right or left direction). In this case, the electronic device 101 may be changed such that the structure illustrated in the drawing slides in the X-axis direction.

According to an embodiment of the disclosure, the first case 210 may include a first portion (a lower end portion of the first case 210) that surrounds at least a portion of a lower end edge (e.g., the -Y-axis edge) of the display assembly 360, a second portion extending from one edge of the first portion in the Y-axis direction, a third portion extending from an opposite edge of the first portion in the Y-axis direction, and a fourth portion that forms a bottom side of the first case 210. The first to third portions of the first case 210 described above may have the shape of "C", and at least a portion of the first-type first housing 410 and at least a portion of the second housing 420 may be inserted into the first to third portions of the first case 210 in the -Y-axis direction from the Y-axis direction.

According to an embodiment of the disclosure, the second case 220 may include a fifth portion (an upper end portion of the second case 220) that surrounds at least a portion of an upper end edge (e.g., the -Y-axis edge) of the display assembly 360, a sixth portion extending from one edge of the fifth portion in the -Y-axis direction, and a seventh portion extending from an opposite edge of the fifth portion in the -Y-axis direction. The fifth to seventh portions of the second case 220 described above may have the shape of "C", and at least a portion of the first-type first housing 410 and at least a portion of the second housing 420 may be inserted into the fifth to seventh portions of the second case 220 in the Y-axis direction from the -Y-axis direction. At least a portion (e.g., the first to third portions) of the first case 210 and at least a portion (e.g., the fifth to seventh portions) of the second case 220 may be disposed to face each other.

The second housing 420 (or, the fixed bracket, the fixed support structure, the fixed support member, the fixed frame, or the first plate) may be located inside the electronic device 101 (e.g., inside the first case 210). The second housing 420 may be connected (or, coupled) with the first case 210. Alternatively, at least a portion of the second housing 420 may be integrally formed with the first case 210. The first case 210 and the second housing 420 may form a first frame (or, a first frame structure or a first framework) capable of withstanding a load, thereby contributing to the durability or rigidity of the electronic device 101. Electronic components or various members related to the electronic components may be disposed in or supported by the first frame.

The second housing 420 may support at least a portion (e.g., the second screen area 262) of the display 260. For example, the second housing 420 may include a curved area 421, and at least a portion of the second screen area 262 of the display 260 may be located on the curved area 421 depending on the retracted or extended position of the electronic device 101. When the second case 220 (or, the first-type first housing 410) slides, the second screen area 262 of the display 260 may be moved (e.g., withdrawn) out of the inner space of the first case 210 or may be moved (or, inserted) into the inner space of the first case 210.

At least a portion of the first-type first housing 410 (or, the slide frame, the slide housing, the slide bracket, the slide support structure, the slide support member, or the second plate) may be located inside the electronic device 101 to correspond to at least one of the first case 210 or the second case 220. At least a portion of the first-type first housing 410 may be coupled to the second case 220 or may be integrally formed with the second case 220. The second case 220 and the first-type first housing 410 may form a second frame (or, a second frame structure or a second framework) capable of withstanding a load of a certain magnitude or more, thereby contributing to the durability or rigidity of the electronic device 101. Electronic components or various members related to the electronic components may be disposed in or supported by the second frame. For example, a battery 205 and a printed circuit board 204 may be disposed in or supported by the second frame.

The first-type first housing 410 may support at least a portion of the display assembly 360 in the rear direction (e.g., the -Z-axis direction). The first-type first housing 410 may support at least a portion (e.g., the first screen area 261) of the display 260. The first-type first housing 410 may be attached (or, bonded) to at least a portion of the display 260 (e.g., the first screen area 261 of the display) through an adhesive member (not illustrated). The first-type first housing 410 may linearly reciprocate in the +Y/-Y-axis directions. The first-type first housing 410, together with the second case 220, may slide relative to the first case 210.

A portion of the first-type display cover 300 may be coupled with one side of the first-type first housing 410, and the remaining portion of the first-type display cover 300 may be disposed to cover one side of the display 260. In this regard, the cross-section of at least a portion of the first-type display cover 300 may have a hook shape or a curved shape. The first-type display cover 300 may be mechanically coupled with the first-type first housing 410 or may be coupled with the first-type first housing 410 using an adhesive material or high heat and pressure. The first-type display cover 300 may be formed of a material that is the same as, or different from, the material of the first-type first housing 410. For example, the first-type display cover 300 may be formed of a shape-memory alloy, or at least a portion of the first-type display cover 300 may be formed of a moldable material. Alternatively, the first-type display cover 300 may be formed of a specific metal capable of being molded. One end (e.g., the edge in the - Y-axis direction) of the first-type display cover 300 may be covered by or coupled with the first case 210, and an opposite end (e.g., the edge in the Y-axis direction) of the first-type display cover 300 may be covered by or coupled with the second case 220. According to an embodiment of the disclosure, the material of the first-type display cover 300 may be different from the material of the second case 220 (or, the first case 210). For example, the first-type display cover 300 may be formed of a material having a higher rigidity than the material of the second case 220 (or, the first case 210). Alternatively, the rigidity of the first-type display cover 300 may be higher than the rigidity of the second case 220 (or, the first case 210).

The side member 480 may guide the movement path of the display assembly 360 in the process in which the second case 220 slides relative to the first case 210. For example, the side member 480 may be connected to the first case 210 and may not slide even though the second case 220 slides relative to the first case 210. In another example, the side member 480 may be connected to the second case 220 and may slide relative to the first case 210 together with the second case 220. At least one side member 480 may be provided. For example, a pair of side members 480 may be located on opposite sides of the second case 220 (e.g., in the -X-axis direction and the +X-axis direction). For example, among the side members 480, a first side member disposed on the right side may be connected to one side (e.g., the end in the -X-axis direction) of the second case 220, and a second side member disposed on the left side may be connected to an opposite side (e.g., the end in the +X-axis direction) of the second case 220. However, this is illustrative, and the positions and/or number of side members 480 are not limited thereto.

At least a portion of the display assembly 360 may be supported by at least one of the first case 210, the second case 220, or the first-type first housing 410. For example, a portion of the display assembly 360 may be supported by the second housing 420, and another portion of the display assembly 360 may be supported by the first-type first housing 410 and/or the second housing 420. The display area of the display assembly 360 may vary depending on the movement of the second case 220 relative to the first case 210 (or, the movement of the second housing 420 relative to the first-type first housing 410. For example, when the first-type first housing 410 is moved (or, withdrawn) from the second housing 420 or the first case 210, the area where the display 260 of the display assembly 360 is visually exposed may be increased, and thus the display area may be extended to the first screen area 261 and the second screen area 262. When the first-type first housing 410 is moved (or, inserted) into the second housing 420 or the first case 210, the area where the display 260 of the display assembly 360 is visually exposed may be reduced, and thus the display area may be reduced to the first screen area 261. The display assembly 360 may include a display, a support sheet, and a multi-bar assembly (or, a multi-joint hinge structure or a support structure). However, this is illustrative, and the configuration of the display assembly 360 is not limited thereto. For example, the display assembly 360 may include various layers such as a cover layer and/or a touch panel.

The display 260 may visually display information. At least a portion of the display 260 may be formed to be flexible. The display area of the display 260 visually exposed to the outside may vary depending on the movement of the second case 220 relative to the first case 210. Hereinafter, for convenience of description, based on the display 260, the direction in which information is visually displayed on the display 260 is referred to as the front direction (e.g., the +Z-axis direction), and the direction opposite to the front direction is referred to as the rear direction (e.g., the -Z-axis direction).

A side (or, lateral) edge of the display assembly 360 may be covered by the first-type display cover 300. For example, opposite edges of a portion of the display 260 covered by the first case 210 when the electronic device 101 is in the retracted position (or, state) and disposed between the first case 210 and the second case 220 when the electronic device 101 is in the extended position may be covered by the first-type display covers 300. Additionally or alternatively, the opposite ends (e.g., the end in the Y-axis direction and the end in the -Y-axis direction) of the first-type display cover 300 may be disposed to be covered by the first case 210 and the second case 220, respectively. Correspondingly, the total length of the first-type display cover 300 in the Y-axis direction may be longer than the Y-axis length of a portion of the display 260 disposed between the first case 210 and the second case 220 in the extended position. Since the opposite edges of the display 260 placed between the first case 210 and the second case 220 in the extended position of the electronic device 101 are covered by the first-type display covers 300 as described above, the opposite edges of the display 260 (e.g., the opposite edges located in the direction perpendicular to the direction in which the display 260 is extended or retracted) may be protected by the first-type display covers 300, and thus damages such as stabbed marks, wrinkles, or scratches caused by external pressure may be prevented (or, improved). Additionally the introduction of foreign matter through the space between the display 260 and the first-type first housing 410 may be prevented (or, improved) by the first-type display covers 300.

The rear cover 440 may be disposed on or coupled to the first case 210 to form at least a portion of the exterior of the electronic device 101. For example, the rear cover 440 may be coupled to a side cover 450 of the first case 210 or may be integrally formed with the side cover 450 of the first case 210. The rear cover 440 may provide a decorative effect on the exterior of the electronic device 101.

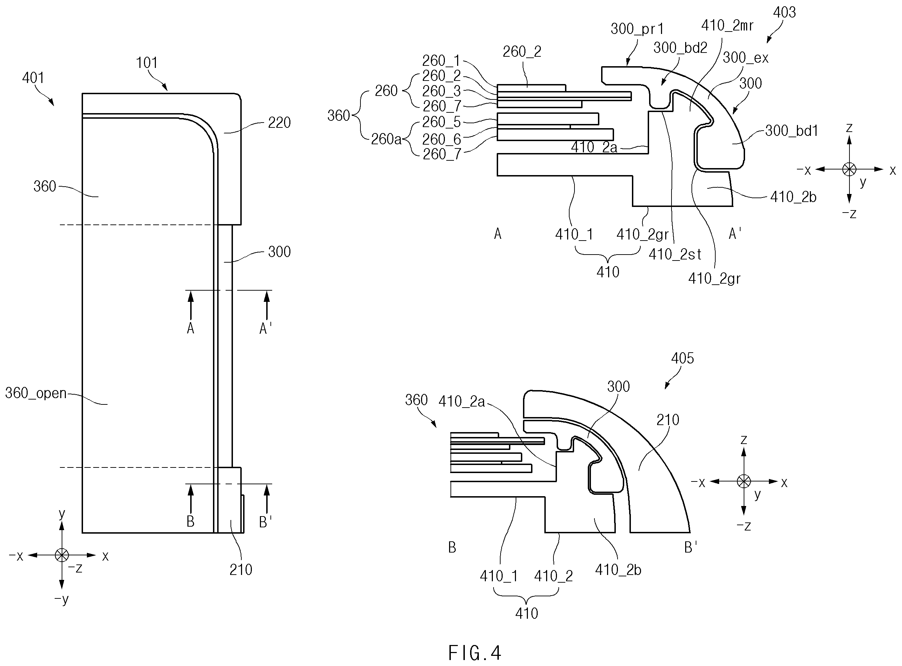

FIG. 4 is a view illustrating a portion of an electronic device in an extended position according to an embodiment of the disclosure. Referring to FIG. 4, state 401 is a view illustrating a portion of the electronic device in the extended position, state 403 is a sectional view of a portion of the electronic device taken along line A-A', and state 405 is a sectional view of a portion of the electronic device taken along line B-B'.

Referring to state 401 of FIG. 4 in addition to at least one of FIG. 2 or FIG. 3, the electronic device 101 in the extended position may include a state in which the second case 220 is moved relative to the first case 210 by a specified distance in the Y-axis direction. The extended position may correspond to the second state S2 described above with reference to FIG. 2. In the extended position, one end (e.g., the end in the Y-axis direction) of the first case 210 and one end (e.g., the end in the -Y-axis direction) of the second case 220 may be spaced apart from each other. Correspondingly, when observed in the Z-axis direction, at least a portion of the lower end edge (e.g., the edge in the -Y-axis direction) of the display assembly 360 (or, the display 260 of FIG. 3) exposed to the outside in the extended position may be covered by the first case 210, and at least a portion of the upper end edge (e.g., the edge in the Y-axis direction) of the display assembly 360 may be covered by the second case 220. A portion of a right edge (e.g., a portion of the edge in the X-axis direction) of the display assembly 360 exposed to the outside in the extended position (or, the retracted position) may include a portion covered by a right side portion of the first case 210, a portion covered by a right side portion of the second case 220, and a portion covered by the right first-type display cover 300 (e.g., a portion of left and right (or, opposite) edges of a portion 360_open of the display located in the separation space between the first case 210 and the second case 220). When the electronic device 101 is in the extended position, at least a portion of the first-type display cover 300 may be exposed to the outside, and when the electronic device 101 is in the retracted position, the first-type display cover 300 may be covered by the first case 210 and the second case 220. Meanwhile, in FIG. 4, the structure of a right side portion of the electronic device 101 in the extended position is exemplified, but a left side portion of the electronic device 101 may also include the same structure as the right side portion. Correspondingly, at least a portion of a left edge (e.g., the edge in the -X-axis direction) of the display assembly 360 exposed to the outside in the extended position of the electronic device 101 may be protected by the first-type display cover 300 disposed on the left side of the first-type first housing 410 in FIG. 3.

Referring to state 403 corresponding to the cross-section taken along line A-A', the electronic device 101 may include the display assembly 360, the first-type first housing 410, and the first-type display cover 300.

The display assembly 360 may include the display 260 and a multi-assembly 260a. The display 260 may include, for example, a window 260_1, a protective layer 260_2, a display panel 260_3, and a rear panel 260_4. The window 260_1 may be formed of a transparent material (e.g., a glass material or a polymer material having a transparency of a certain level or higher). The protective layer 260_2 may be disposed between the display panel 260_3 and the window 260_1 and may protect the display panel 260_3. The protective layer 260_2 may include, for example, a transparent adhesive layer. In another example, the protective layer 260_2 may include a polarization layer. The display panel 260_3 may include a structure in which a plurality of pixels are arranged in a matrix form. The display panel 260_3 may express a screen using the plurality of pixels, and the electronic device 101 of the disclosure is not limited to the type of the display panel 260_3 (e.g., a liquid crystal display device, an OLED display device, or a quantum dot panel). The rear panel 260_4 may include at least one sheet (or, layer) that supports the display panel 260_3. For example, the rear panel 260_4 may include at least one of an embo layer or a metal layer (e.g., a copper layer). The multi-assembly 260a may support the display 260 and may support deformation of retracted and extended positions of the display 260. In this regard, the multi-assembly 260a may include a support sheet 260_5 supporting the display 260, multi-bars 260_7 disposed under the support sheet 260_5, and an adhesive structure 260_6 disposed between the support sheet 260_5 and the multi-bars 260_7. The support sheet 260_5 and the rear panel 260_4 of the display 260 may be bonded to each other. At least a portion of the support sheet 260_5 may include a metallic or non-metallic material. The support sheet 260_5 may be disposed on the rear side of the display 260 and may support the display 260. The adhesive structure 260_6 may serve to fix the multi-bars 260_7 to the support sheet 260_5. The adhesive structure 260_6 may include at least one of an adhesive material or a mechanical coupling structure and may bond (or, couple) the multi-bars 260_7, which are spaced apart from each other at a certain interval, to the support sheet 260_5. The multi-bars 260_7 may be coupled to the support sheet 260_5 through the adhesive structure 260_6 and may be used to move the display 260 fixed on the support sheet 260_5. For example, the multi-bars 260_7 may form gear patterns spaced apart from each other at a certain interval and may rotate while engaging with a drum disposed on one side of the second housing 420.

The first-type first housing 410 may include a bottom portion 410_1 on which at least a portion of the display assembly 360 is disposed and a side portion 410_2 disposed at one edge (e.g., the edge in the X-axis direction or the -X-axis direction) of the bottom portion 410_1. The display assembly 360 may be disposed on the bottom portion 410_1 (or, in the upper direction with respect to the bottom portion 410_1), and the second housing 420 may be disposed under the bottom portion 410_1 (or, in the lower direction with respect to the bottom portion 410_1). The side portion 410_2 may extend (e.g., may be vertically formed) from the bottom portion 410_1, and at least a portion thereof may include a curved surface. A portion of the first case 210 (e.g., the second portion and the third portion) and a portion of the second case 220 (e.g., the sixth portion and the seventh portion) may be stacked on the side portion 410_2 depending on positions. The side portion 410_2 may include, for example, an upper side portion 410_2a (or, an edger portion between the front side and the lateral side of the first-type first housing 410) and a lower side portion 410_2b that protrude in the Z-axis direction based on the bottom portion 410_1. At least a portion of the first-type display cover 300 may be disposed on (or, coupled to) the upper side portion 410_2a. In regard to the coupling of the first-type display cover 300, the upper side portion 410_2a may include a first cover groove 410_2gr (or, a cover groove, a rail groove, a first groove, or a groove having an undercut structure), a cover step 410_2st (or, a mounting groove or a second groove), and a mounting rail 410_2mr. At least a portion of a first cover body 300_bd1 of the first-type display cover 300 may be disposed in (or, coupled to) the first cover groove 410_2gr. In this regard, the first cover groove 410_2gr may include the shape of a groove (a rail groove) recessed in the -X-axis direction on the surface of the first-type first housing 410 that faces in the X-axis direction. Since the first cover body 300_bd1 is inserted into the first cover groove 410_2gr, the movement of the first-type display cover 300 in the upper or lower direction (e.g., the Z-axis direction or the -Z-axis direction) may be restricted (or improved). At least a portion of a second cover body 300_bd2 of the first-type display cover 300 may be disposed (or, seated) on the cover step 410_2st. In this regard, the cover step 410_2st may include a fault (or, a stair shape) engraved in the Z-axis direction. The support force (e.g., resistance to pressure applied from the outside) of a first cover portion 300_pr1 of the first-type display cover 300 may be improved based on the cover step 410_2st and the second cover body 300_bd2. The mounting rail 410_2mr may include a structure that connects a protruding portion disposed in the Z-axis direction among the opposite protruding portions that form the first cover groove 410_2gr and a protruding portion on one side that forms the cover step 410_2st. For example, the mounting rail 410_2mr may include a shape that protrudes from the bottom portion 410_1 in a diagonal direction between the X-axis and the Z-axis. The mounting rail 410_2mr may have a shape in which the thickness decreases toward the bottom portion 410_1 of the first-type first housing 410 and increases farther away from the bottom portion 410_1. In another example, only the first cover groove 410_2gr may be formed on the upper side portion 410_2a of the first-type first housing 410 (e.g., the cover step 410_2st and the mounting rail 410_2mr may be excluded, and a certain curved surface may be formed).

As described above, the mounting rail 410_2mr formed by the sidewalls that form the first cover groove 410_2gr and the cover step 410_2st may include a structure in which the portion protruding in the X-axis direction and the portion protruding in the Z-axis direction are connected with each other. At least one of the size or the shape of the mounting rail 410_2mr may correspond to the shape of the inner side of a connecting portion 300_ex that connects the first cover body 300_bd1 and the second cover body 300_bd2 of the first-type display cover 300. For example, when the inner side of the connecting portion 300_ex of the first-type display cover 300 includes a groove or empty space (or cavity) having a concave shape (or, a jar shape), the mounting rail 410_2mr may include a convex shape corresponding to the concave shape or the periphery of the empty space.

The first-type display cover 300 may include the first cover body 300_bd1, the second cover body 300_bd2, the connecting portion 300_ex, and the first cover portion 300_pr1. The outer surface (e.g., the surface observed in the Z-axis direction and the X-axis direction) of the first-type display cover 300 may form an overall smooth curved surface. Alternatively, at least a portion of the outer surface of the first-type display cover 300 may include a stepped shape. The inner surface (e.g., the surface observed in the -Z-axis direction or the -X-axis direction) of the first-type display cover 300 may at least partially protrude and may include an engraved (or, recessed) shape corresponding to the protruding portion. For example, the first cover body 300_bd1 may include a portion (or, a protruding portion) that is at least partially disposed in the first cover groove 410_2gr formed on the first-type first housing 410 and that protrudes in the -X-axis direction. The second cover body 300_bd2 may include a portion (or, a protruding portion) that is disposed on the cover step 410_2st formed on the first-type first housing 410 and that protrudes in the -X-axis direction. The outer surface of the connecting portion 300_ex may be formed to be curved, and the inner surface of the connecting portion 300_ex may form an empty space together with the protruding portion of the first cover body 300_bd1 and the protruding portion of the second cover body 300_bd2. The first cover portion 300_pr1 may extend from one side (e.g., the upper side in the Z-axis direction) of the second cover body 300_bd2 by a certain length in the -X-axis direction. For example, the first cover portion 300_pr1 may be disposed to cover at least a portion of the edge of the display 260 when observed in the Z-axis direction. For example, when observed in the Z-axis direction, at least a portion of the first cover portion 300_pr1 and at least a portion of the edge of the display panel 260_3 (or, the edges of the protective layer 260_2 and the display panel 260_3) may be disposed to overlap each other. In the illustrated drawing, the structure in which the edge of the window 260_1 and the first cover portion 300_pr1 are disposed (or, formed) so as not to overlap each other when observed in the Z-axis direction (in the direction toward the display 260 from the front side of the display 260) is exemplified, but the disclosure is not limited thereto. For example, when observed in the Z-axis direction, at least a portion of the edge of the window 260_1 and the first cover portion 300_pr1 may be disposed to overlap each other.

Referring to state 405 corresponding to the cross-section taken along line B-B', the electronic device 101 may include the display assembly 360, the first-type first housing 410, the first-type display cover 300, and the first case 210. The display assembly 360, the first-type first housing 410, and the first-type display cover 300 illustrated on the cross-section taken along line B-B' may have structures that are the same as the structures described above with reference to the cross-sectional view taken along line A-A' or structures similar to the structures within a certain error range.

At least a portion of the first case 210 may include an inner surface corresponding to the outer surface (e.g., the surface visible when observed in at least one of the Z-axis direction or the X-axis direction) of the first-type display cover 300. For example, the curvature of the inner surface (e.g., the surface facing the first-type display cover 300) of the first case 210 may be the same as the curvature of at least a portion of the outer surface of the first-type display cover 300 or may be similar to the curvature of at least a portion of the outer surface of the first-type display cover 300 within a certain error range. Alternatively, the inner surface of the first case 210 may partially include a curvature that is the same as the curvature of at least a portion of the outer surface of the first-type display cover 300 (or, a curvature similar to the curvature of at least a portion of the outer surface of the first-type display cover 300 within a certain error range). The curvature of at least a portion of the outer surface (e.g., the surface visible when observed in at least one of the Z-axis direction or the X-axis direction) of the first case 210 may include a curvature that is the same as the curvature of at least a portion of the inner surface (or, a curvature similar to the curvature of at least a portion of the inner surface within a certain error range). When observed in the Z-axis direction, at least a portion of the first case 210 may be disposed to surround the outer surface of the first-type display cover 300. For example, the end of the first case 210 in the -X-axis direction and the end of one side (e.g., the first cover portion 300_pr1) of the first-type display cover 300 in the -X-axis direction may be aligned with each other (or, the ends of the lengths protruding in the -X-axis direction may coincide with each other). According to an embodiment of the disclosure, the thickness of the first case 210 that covers the first-type display cover 300 may be different from the thickness of the first-type display cover 300. For example, the thickness of the first case 210 that covers the first-type display cover 300 may be greater than the thickness of the first-type display cover 300.

Meanwhile, the cross-sectional views taken along the cutting lines illustrated in FIG. 4 illustrate only some of the components of the electronic device 101, and the electronic device 101 of FIG. 4 may further include at least some of the other components illustrated in the exploded perspective view of the electronic device described above with reference to FIG. 3.

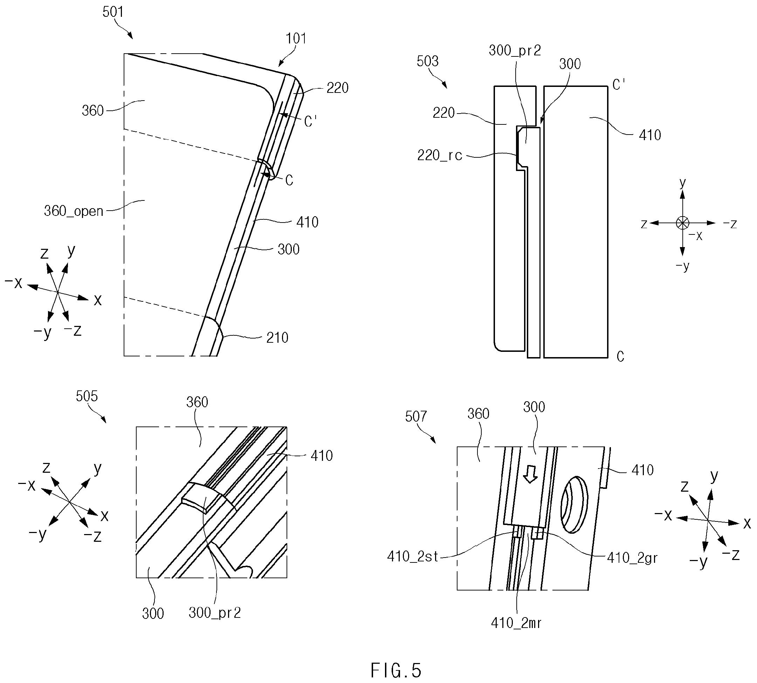

FIG. 5 is a view illustrating a portion of an electronic device in an extended position according to an embodiment of the disclosure. Referring to FIG. 5, state 501 is a perspective view of a portion of the electronic device in the extended position, state 503 is a sectional view of the electronic device 101 taken along line C-C' in state 501, state 505 is a view illustrating an example of a portion of the electronic device 101 from which the second case 220 is removed, and state 507 is a view illustrating an example of a portion of the electronic device 101 from which the first case 210 is removed.

Referring to state 501 of FIG. 5 in addition to at least one of FIGS. 2 to 4, in the second state S2 (or, in the extended position), the electronic device 101 may include a state in which the second case 220 is moved by a specified distance in the Y-axis direction relative to the first case 210 (or, a state in which the first case 210 is moved by a specified distance in the -Y-axis direction relative to the second case 220). The distance between the first case 210 and the second case 220 may vary depending on a design form or a user operation. In the extended position, one end (e.g., the edge in the -Y-axis direction) of the first-type display cover 300 may be disposed to be covered by the first case 210, and an opposite end (e.g., the edge in the Y-axis direction) of the first-type display cover 300 may be disposed to be covered by the second case 220. Alternatively, when observed in the Z-axis direction, one end (e.g., the edge in the Y-axis direction) of the first-type display cover 300 and at least a portion of the first case 210 may be disposed to overlap each other (or, a portion of the first case 210 may be stacked on the one end of the first-type display cover 300), and an opposite end (e.g., the edge in the -Y-axis direction) of the first-type display cover 300 and at least a portion of the second case 220 may be disposed to overlap each other (or, a portion of the second case 220 may be stacked on the opposite end of the first-type display cover 300). As described above with reference to FIGS. 2 to 4, in the extended position (or, in the retracted position), the lower edge of the display assembly 360 (or, the lower end edge of the display 260 of FIG. 3 and a portion of the side portions connected to the left and right sides of the lower end edge) may be covered by the first case 210, and at least a portion of the upper edge of the display assembly 360 (or, the upper end edge of the display 260 of FIG. 3 and a portion of the side portions connected to the left and right sides of the upper end edge) may be covered by the second case 220. At least a portion of the first-type display cover 300 (e.g., the first cover portion 300_pr1) may be disposed to cover the left and right edges (or, at least a portion of the edges) of one portion 360_open of the display assembly 360 (e.g., a portion of the display assembly 360 located in the space between the first case 210 and the second case 220). In the extended position, at least a portion of the first-type display cover 300 may be exposed to be observed from the outside, and in the retracted position, the first-type display cover 300 may be covered by the first case 210 and the second case 220. State 501 represents a portion of the electronic device 101, and the overall structure may have the structure of the electronic device 101 of FIGS. 2 and 3 described above. Accordingly, another first-type display cover may be disposed on the opposite side of the illustrated first-type display cover 300 (e.g., at a symmetrical point in the -X-axis direction with respect to the Y-axis) with the same structure, size, and position. Alternatively, depending on a design change, the electronic device 101 may include only one first-type display cover.

Referring to state 503, the cross-section of the electronic device 101 taken along line C-C' may include at least the first-type first housing 410, the first-type display cover 300, and the second case 220.

A slide fixing part 300_pr2 may be disposed on one end surface of the first-type display cover 300. The slide fixing part 300_pr2 may be formed to protrude outward (e.g., upward or from the rear cover 440 toward the front side of the display 260) from the outer surface of the first-type display cover 300. The slide fixing part 300_pr2 may have a solid structure. However, the disclosure is not limited thereto, and a cavity may be formed between the slide fixing part 300_pr2 and the outer surface of the first-type display cover 300. The height of the slide fixing part 300_pr2 (e.g., the height protruding from the outer surface of the first-type display cover 300 or the peripheral surface of the slide fixing part 300_pr2) may correspond to the depth of a cover fixing groove 220_rc formed on the second case 220.

The cover fixing groove 220_rc in which the slide fixing part 300_pr2 is disposed may be formed on the inner side of the second case 220. The depth of the cover fixing groove 220_rc (e.g., the recessed depth in the Z-axis direction) may correspond to the protruding height of the slide fixing part 300_pr2 (e.g., may be the same as the protruding height or may be similar to the protruding height within a certain error). However, the depth of the cover fixing groove 220_rc may be greater than the protruding height. Additionally, the shapes of the slide fixing part 300_pr2 and the cover fixing groove 220_rc may be provided in a hook fastening shape. Alternatively, an adhesive member or an adhesive material may be disposed between the slide fixing part 300_pr2 and the cover fixing groove 220_rc to improve the fixed state.

Referring to state 505, when the second case 220 of the electronic device 101 is removed, at least a portion of the upper end of the first-type display cover 300 coupled to the first-type first housing 410 may be observed from the outside. The slide fixing part 300_pr2 described above in state 503 may be disposed at one end (e.g., the edge in the Y-axis direction) of the first-type display cover 300. The slide fixing part 300_pr2 may be formed to protrude upward from the surface of the one end of the first-type display cover 300. The width of the slide fixing part 300_pr2 in the X-axis direction may be smaller than the width of the first-type first housing 410 in the X-axis direction. The width of the slide fixing part 300_pr2 in the X-axis direction and the length of the slide fixing part 300_pr2 in the Y-axis direction may correspond to (may be the same as or similar to) the size of the cover fixing groove 220_rc formed on the second case 220.

Referring to state 507, when the first case 210 of the electronic device 101 is removed, at least a portion of the lower end of the first-type display cover 300 coupled to the first-type first housing 410 may be observed from the outside. A groove (e.g., the first cover groove 410_2gr and the cover step 410_2st described with reference to FIG. 4) where the first-type display cover 300 is inserted and fixed may be formed on the first-type first housing 410, and the first-type display cover 300 may be inserted along the groove (e.g., at least a part of the first cover groove 410_2gr and the cover step 410_2st).

Meanwhile, in the above description, it is exemplified that the protruding slide fixing part 300_pr2 is formed on the first-type display cover 300 and the engraved cover fixing groove 220_rc is formed on the second case 220, but the electronic device 101 of the disclosure may include an embodiment of the opposite case. For example, the electronic device 101 may include a structure in which an engraved cover fixing groove is formed on the first-type display cover 300 and a protruding slide fixing part is formed one the second case 220.

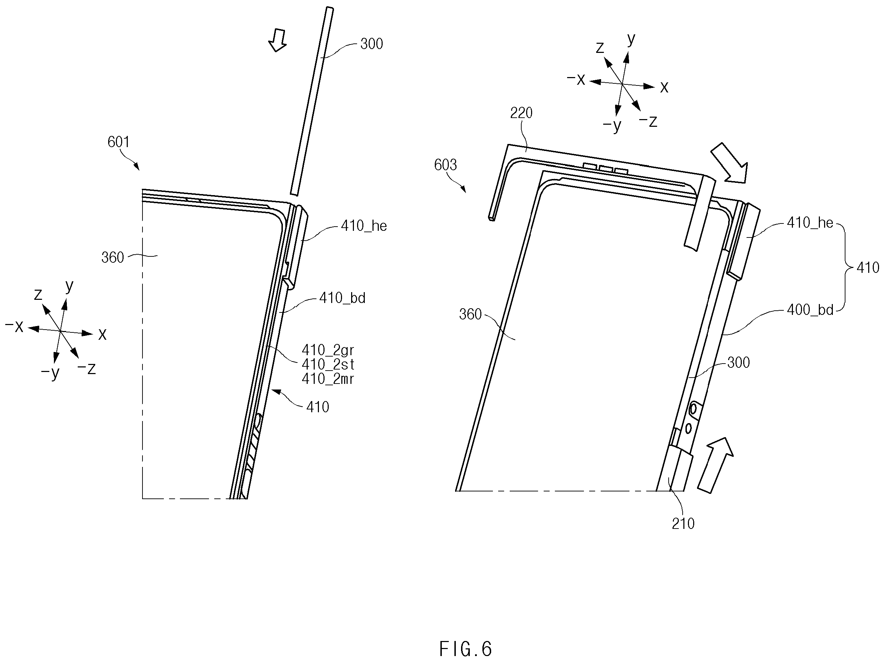

FIG. 6 is a view illustrating an assembly method of an electronic device according to an embodiment of the disclosure. Referring to FIG. 6, state 601 represents a situation in which the first-type display cover 300 is fastened to the first-type first housing 410, and state 603 represents a situation in which the second case 220 is fastened in the state in which the first-type display cover 300 is fastened.

Referring to state 601 of FIG. 6 in addition to at least one of FIGS. 2 to 5, the electronic device 101 according to an embodiment may include the first-type first housing 410 and the first-type display cover 300 on which at least a portion of the display assembly 360 (or, the display 260 of FIG. 3) is disposed (or, seated). The first-type first housing 410 may include a front side (or, a bottom portion) on which at least a portion of the display assembly 360 is placed and opposite lateral sides (or, opposite lateral portions) that are connected with the front side and that support the front side. The first-type first housing 410 may include, on one lateral side, a first plate header 410_he (or, a housing header or a frame header) and a first plate body 410_bd (or, a housing body or a frame body). Additionally or alternatively, the same structure as the one lateral side of the first-type first housing 410 described above (e.g., a plate header and a plate body) may be disposed on an opposite lateral side the first-type first housing 410. The first plate body 410_bd may be disposed to support the slide front side. For example, the first plate body 410_bd may be formed to be perpendicular to the slide front slide. At least a portion of the first plate body 410_bd may be coupled (e.g., coupled so as to be movable in the Y-axis direction) with a portion of the first case 210 (e.g., a lateral portion of the first case 210). The first plate header 410_he may be connected with the first plate body 410_bd, may be disposed at the edge of the first plate body 410_bd in the Y-axis direction, and may be formed to protrude further in the X-axis direction than the surface of the first plate body 410_bd. A portion of the second case 220 (e.g., opposite lateral portions of the second case 220) may be coupled to the first plate header 410_he. The length of the first plate header 410_he in the Y-axis direction may be the same as or similar to the lateral length of the second case 220.

At least a portion of the display assembly 360 may be placed on the front side (e.g., the side facing in the Z-axis direction) of the first-type first housing 410. In this regard, a groove in which at least a portion of the display assembly 360 is placed may be formed on the front side of the first-type first housing 410. Alternatively, at least one sidewall surrounding the edge of at least a portion of the display assembly 360 may be disposed on the front side of the first-type first housing 410. For example, at least a portion of the display assembly 360 may be fixed (or, bonded) to the first-type first housing 410. In this regard, an adhesive layer or an adhesive material may be disposed between the at least a portion of the display assembly 360 and the first-type first housing 410.

A coupling structure (e.g., at least one of the first cover groove 410_2gr, the cover step 410_2st, or the mounting rail 410_2mr) to which the first-type display cover 300 is coupled may be formed on at least a portion of the edge between the front side and the lateral side of the first-type first housing 410 (e.g., the upper side portion 410_2a of FIG. 3). The coupling structure (e.g., at least one of the first cover groove 410_2gr, the cover step 410_2st, or the mounting rail 410_2mr) to which the first-type display cover 300 is coupled may be formed over the upper side (or, the edge) of the first plate header 410_he and the upper side (or, the edge) of the first plate body 410_bd of the first-type first housing 410. The first-type display cover 300 may be inserted into and fastened to the coupling structure formed at the edge of the first-type first housing 410 in the -Y-axis direction from the Y-axis direction.

Referring to state 603, after the first-type display cover 300 is coupled to the upper edge of the first-type first housing 410, the first case 210 may be coupled upward from below the first-type first housing 410 to cover a portion of the -Y-axis edge of the first-type display cover 300. In this regard, the first-type first housing 410 may include a rail groove to which the first case 210 is fastened upward from below, and a rail may be formed on the inner side of the first case 210. In addition, after the first-type display cover 300 is coupled to the upper edge of the first-type first housing 410, the second case 220 may be coupled in the direction from the front side to the rear side of the first-type first housing 410 to cover a portion of the Y-axis edge of the first-type display cover 300. An adhesive material or an adhesive tape may be disposed in at least one place between the inner surface of the second case 220 and the edge of the first-type first housing 410 (e.g., an upper lateral portion of the first-type first housing 410 (e.g., the lateral portion observed in the Y-axis direction), an upper front end (e.g., a portion of the Y-axis edge of the front side observed in the Z-axis direction), or an upper right end (e.g., the Y-axis edge of the lateral portion observed in the X-axis direction or the first plate header 410_he) such that the second case 220 is fixed after being seated on the front side of the first-type first housing 410. Additionally, an adhesive tape or an adhesive material may be disposed on at least a portion between the upper left end located on the opposite side to the upper right end of the first-type first housing 410 and the second case 220.

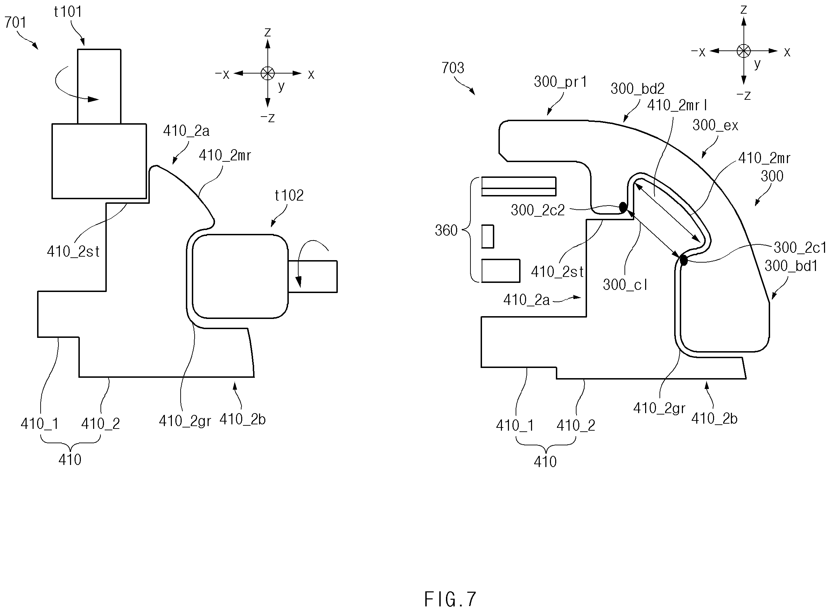

FIG. 7 is a view illustrating forming a structure of a first-type first housing according to an embodiment of the disclosure. Referring to FIG. 7, a state 701 is a view illustrating an example of a processing method of the first-type first housing, and state 703 is a view illustrating a state in which other components are disposed on the processed first-type first housing 410.

Referring to state 701 of FIG. 7 in addition to at least one of FIGS. 2 to 6, the first-type first housing 410 may include the bottom portion 410_1, at least a portion of which is formed to be flat, the upper side portion 410_2a protruding upward (e.g., in the Z-axis direction) from an edge (e.g., the edge in the X-axis direction) of the bottom portion 410_1, and the lower side portion 410_2b protruding downward (e.g., in the - Z-axis direction) from the edge of the bottom portion 410_1. The upper side portion 410_2a and the lower side portion 410_2b may be connected with each other or may be connected with each other through one edge of the bottom portion 410_1. At least a portion of the shape (or, part) of the upper side portion 410_2a in the -X-axis direction may face the edge of at least a portion of the display assembly 360 (or, the display 260 of FIG. 3) and may include one surface (or, an inner surface) vertically formed in the Z-axis direction, and at least a portion of the shape (or, part) of the upper side portion 410_2a in the X-axis direction may include a curved surface (or, an outer surface). A first mechanical part t101 may remove at least a portion of the lateral side of the lateral portion of the first-type first housing 410 in the -X-axis direction from the X-axis direction of the first-type first housing 410. A second mechanical part t102 may remove at least a portion of the upper side of the lateral portion of the first-type first housing 410 in the -Z-axis direction from the Z-axis direction of the first-type first housing 410. The first mechanical part t101 and the second mechanical part t102 may be the same machine tool or may include different machine tools.

Referring to state 703, depending on the operation of the first mechanical part t101, the first-type first housing 410 may have the first cover groove 410_2gr formed thereon, and depending on the operation of the second mechanical part t102, the cover step 410_2st of the first-type first housing 410 may be formed. Additionally or alternatively, depending on the operation of the first mechanical part t101 and the second mechanical part t102, the mounting rail 410_2mr may be formed between the first cover groove 410_2gr and the cover step 410_2st. As described above with reference to FIG. 6, the first-type display cover 300 may be mounted on and fastened to the upper side of the first-type first housing 410 where the first cover groove 410_2gr, the cover step 410_2st, and the mounting rail 410_2mr are formed. Correspondingly, at least a portion of the first cover body 300_bd1 of the first-type display cover 300 may be disposed in (or, coupled to or seated in) the first cover groove 410_2gr, at least a portion of the second cover body 300_bd2 of the first-type display cover 300 may be disposed on the cover step 410_2st, and the inner side of the connecting portion 300_ex of the first-type display cover 300 may be fastened to the mounting rail 410_2mr. When observed in the Z-axis direction, the first cover portion 300_pr1 protruding from the first cover body 300_bd1 in the -X-axis direction may be disposed to cover one edge of at least a portion of the display assembly 360.

The mounting rail 410_2mr may have a gradually increasing width in a diagonal direction between the X-axis and the Z-axis and may have a gradually decreasing width in a diagonal direction between the -X-axis and the -Z-axis. For example, the Z-axis cross-section of at least a portion of the mounting rail 410_2mr may include a mushroom shape, a cone shape, or an anchor shape. For example, the width (or, distance) between the corners of the outer portion of the mounting rail 410_2mr may be longer than the width (or, distance) between a first cover corner 300_2c1 corresponding to the upper left corner of the first cover body 300_bd1 and a second cover corner 300_2c2 corresponding to the lower left corner of the second cover body 300_bd2.

Meanwhile, the example of forming the first-type first housing 410 using the mechanical parts t101 and t102 has been described, but the disclosure is not limited thereto. For example, at least a portion of the first-type first housing 410 may be formed through injection molding.

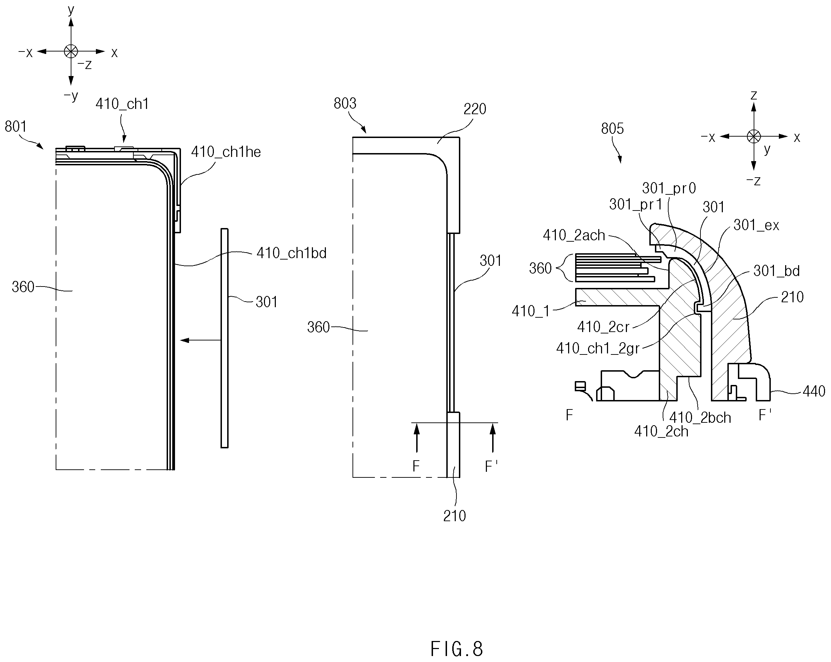

FIG. 8 is a view illustrating a structure of a second-type first housing and a second display cover of an electronic device according to an embodiment of the disclosure. Referring FIG. 8, state 801 is a view illustrating the display assembly 360 (or, the display 260 of FIG. 3), the second-type first housing 410_ch1, and a second-type display cover 301 among the components of the electronic device 101, state 803 is a view illustrating an example of a form in which the first case 210 and the second case 220 are coupled in a state in which the second-type display cover 301 is coupled to the second-type first housing 410_ch1, and state 805 is a view illustrating an example of a cross-section taken along line F-F' in state 803.

Referring to state 801 of FIG. 8 in addition to at least one of FIGS. 2 to 7, the electronic device 101 may include the second-type first housing 410_ch1, and at least a portion of the display assembly 360 (or, the display 260 of FIG. 3) may be disposed on the front side (e.g., a portion observed in the Z-axis direction) of the second-type first housing 410_ch1. For example, at least a portion of the display assembly 360 may be bonded or fixed to the front side of the second-type first housing 410_ch1. The second-type first housing 410_ch1 may include a second plate header 410_ch1he on which the second case 220 disposed and a second plate body 410_ch1bd to which the second-type display cover 301 and at least a portion of the first case 210 are coupled.

Referring to state 803, the second-type display cover 301 may be coupled with the second plate body 410_ch1bd and may be disposed to cover at least a portion of one edge of the display assembly 360 (e.g., the X-axis edge of a portion of the display assembly 360 exposed to the outside or disposed to face toward the front side). One edge (e.g., the -Y-axis edge) of the second-type display cover 301 may be covered by at least a portion of the first case 210, and an opposite edge (e.g., the Y-axis edge) of the second-type display cover 301 may be covered by at least a portion of the second case 220. The slide fixing part 300_pr2 described above with reference to FIG. 4 may be disposed on at least one of the one edge or the opposite edge of the second-type display cover 301.

Referring to state 805, the second-type first housing 410_ch1 of the electronic device 101 may include a bottom portion 410_1 and a modified side portion 410_ch1. At least one of the structure, size, material, or position of the bottom portion 410_1 of the second-type first housing 410_ch1 may be the same as or similar to at least one of the structure, size, material, or position of the bottom portion 410_1 of the first-type first housing 410 described above with reference to FIGS. 2 to 7. The modified side portion 410_ch1 may include an upper side modified portion 410_2ach protruding from the bottom portion 410_1 in the Z-axis direction and a lower side modified portion 410_2bch protruding from the bottom portion 410_1 in the -Z-axis direction. The upper side modified portion 410_2ach may include one surface vertically formed toward a lateral side of an edge of the display assembly 360 and an outer surface 410_2cr, at least a portion of which includes a curved surface. A second cover groove 410_ch1_2gr in which a portion of the second-type display cover 301 (e.g., a portion of a cover body 301_bd protruding in the -X-axis direction from the X-axis direction) is mounted may be formed on the lower side modified portion 410_2bch (or, within a certain range between the upper side modified portion 410_2ach and the lower side modified portion 410_2bch). The second cover groove 410_ch1_2gr may have at least one of the same structure, size, or position as the first cover groove 410_2gr that is formed on the first-type first housing 410 described above and to which the first-type display cover 300 is coupled. Alternatively, as the shape of the second-type display cover 301 is different from that of the first-type display cover 300, the second cover groove 410_ch1_2gr may be formed to be different from the first cover groove 410_2gr formed on the first-type first housing 410. For example, the size of the second cover groove 410_ch1_2gr may be formed to be smaller (or, larger or deeper) than the size of the first cover groove 410_2gr.

The second-type display cover 301 may be formed to cover at least a portion of one edge (e.g., the X-axis edge) of the display assembly 360 while surrounding at least a portion of the outer surface 410_2cr of the upper side modified portion 410_2ach. In this regard, the curvature of the inner surface (e.g., the inner curved surface observed in the -Z-axis direction) of the second-type display cover 301 may correspond to the curvature of the outer surface 410_2cr of the upper side modified portion 410_2ach (e.g., may be the same as or similar to the curvature of the outer surface 410_2cr of the upper side modified portion 410_2ach within a certain error range). For example, a portion of the inner surface of the second-type display cover 301 that faces a portion of the upper side modified portion 410_2ach (e.g., an upper end portion protruding in the Z-axis direction) may be thicker than a surrounding portion in relation to the support of the second-type display cover 301. For example, the outer surface of the second-type display cover 301 may form a smooth curved surface. Accordingly, at least a portion of the inner surface of the second-type display cover 301 may include a protruding portion 301_pr0 that protrudes in the -Z-axis direction, and the protruding portion 301_pr0 may be disposed to make contact with the upper end of the upper side modified portion 410_2ach. In another example, the protruding portion 301_pr0 may be omitted, and the inner surface of the second-type display cover 301 may form a smooth curved surface. The second-type display cover 301 may include a second cover portion 301_pr1 extending from the protruding portion 301_pr in the -X-axis direction). The second cover portion 301_pr1 may be the same as the first cover portion 300_pr1 described above in terms of at least one of structure, size, position, or material. The second-type display cover 301 may include the cover body 301_bd inserted into and fixed to the second cover groove 410_ch1_2gr formed on the second-type first housing 410_ch1. The cover body 301_bd may have, for example, a rail shape. At least a portion of the cover body 301_bd may be fastened to the second cover groove 410_ch1_2gr having a rail groove shape.

At least a portion of the first case 210 may be disposed to cover one edge (e.g., the edge in the -Y-axis direction) of the second-type display cover 301. In this regard, the inner surface of the first case 210 may have the same shape as the outer surface of the second-type display cover 301 (e.g., a curvature the same as or similar to the curvature of the outer surface of the second-type display cover 301 within a certain error range). The first case 210 may include a first portion extending in the Z-axis direction from the -Z-axis direction to surround the second-type first housing 410_ch1 (or, the second-type display cover 301) and a curved portion bent from the first portion toward one edge of the display assembly 360. The end of the curved portion may be aligned with the -X-axis end of the second-type display cover 301. Alternatively, the curved portion may coincide with the end of the second-type display cover 301 protruding in the -X-axis direction (or, in a direction toward one edge of a portion of the display assembly 360 or in a direction toward a lateral edge of a portion of the display assembly 360 that is exposed to the outside). In another case, the end of the first case 210 that faces in the -X-axis direction may be formed to protrude further in the - X-axis direction than the end of the second-type display cover 301 that faces in the -X-axis direction. At least a portion of the first case 210 may be supported by the rear cover 440. The first case 210 may have a uniform thickness. Alternatively, as illustrated, the first case 210 may have different thicknesses depending on positions. For example, the thickness of at least a portion of the first portion of the first case 210 may be greater than the thickness of the curved portion of the first case 210. For example, the second-type display cover 301 and the first case 210 (or, the second case 220) may be bonded to each other (or, an adhesive material or a double-sided tape may be disposed therebetween). For example, when the second-type display cover 301 is formed of a SUS plate and the second-type display cover 301 and the first case 210 (or, the second case 220) are coupled (or, integrated) with each other based on a press method, an electronic device structure simpler than the electronic device structure described with reference to FIG. 4 may be provided.

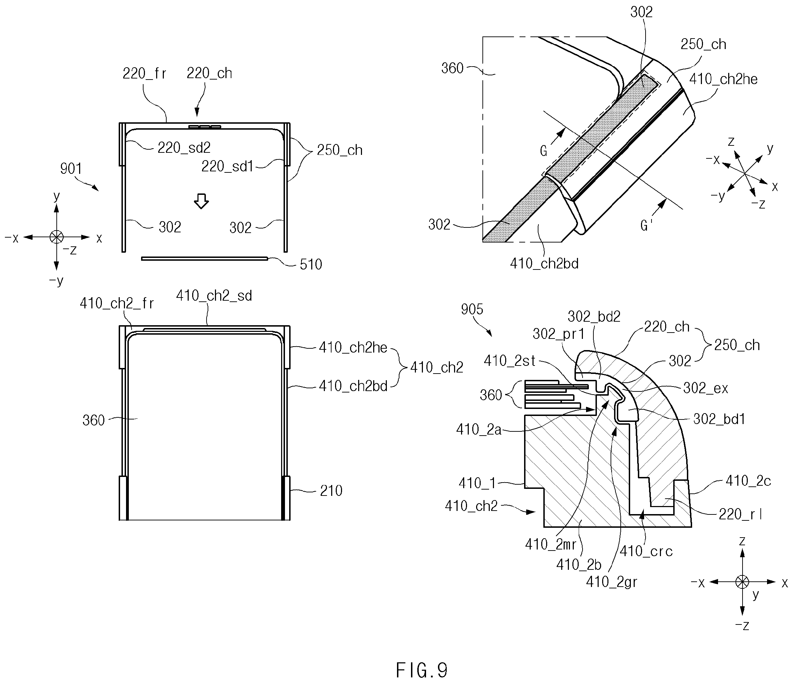

FIG. 9 is a view illustrating a structure of a third-type first housing and a third display cover of an electronic device according to an embodiment of the disclosure. Referring to FIG. 9, state 901 is a view illustrating the form of a modified deco 250_ch in which a second case 220_ch and a third-type display cover 302 among the components of the electronic device 101 are integrated with each other, state 903 is a view illustrating a state in which the modified deco 250_ch is coupled with the third-type first housing 410_ch2, and state 905 is a view illustrating an example of the cross-section taken along line G-G' in state 903. The third-type first housing 410_ch2 may include, for example, a front side on which at least a portion of the display assembly 360 (or, the display 260 of FIG. 3) is placed, a third plate header 410_ch2he coupled to the second case 220_ch, and a third plate body 410_ch2bd that is connected with the third plate header 410_ch2he and that extends in the -Y-axis direction and has at least a portion coupled with the first case 210.

Referring to state 901 of FIG. 9 in addition to at least one of FIGS. 2 to 8, the second case 220_ch may have a C-shaped structure that is open in the -Y-axis direction from the Y-axis direction when observed in the Z-axis direction. For example, the second case 220_ch may include a housing upper end portion 220_fr coupled with the upper edge of the third-type first housing 410_ch2 (e.g., the third plate header 410_ch2he) (or, a portion corresponding to the upper end portion of the second case 220_ch of FIG. 3), a first case side portion 220_sd1 (or, a portion corresponding to the sixth portion in FIG. 3) extending in the -Y-axis direction from one end of the housing upper end portion 220_fr (or, the edge of the housing upper end portion 220_fr in the X-axis direction), and a second case side portion 220_sd2 (or, a portion corresponding to the seventh portion in FIG. 3) extending in the -Y-axis direction from an opposite end of the housing upper end portion 220_fr (or, the edge of the housing upper end portion 220_fr in the -X-axis direction). The housing upper end portion 220_fr may include a front portion facing a partial front side 410_ch2_fr of the third plate header 410_ch2he and a side portion facing a partial lateral side 410_ch2_sd (at least a partial surface observed in the Y-axis direction) of the third plate header 410_ch2he. For example, at least a portion of the Z-axis cross-section of the housing upper end portion 220_fr may include an inverted L-shape. Similarly, at least a portion of the Z-axis cross-section of the first case side portion 220_sd1 and at least a portion of the Z-axis cross-section of the second case side portion 220_sd2 may include an inverted L-shape. An adhesive member 510 may be disposed on the inner side of the housing upper end portion 220_fr. The adhesive member 510 may include a double-sided tape or an adhesive material. The adhesive member 510 may serve to fix the second case 220_ch to the third plate header 410_ch2he. Accordingly, the adhesive member 510 may be disposed between the front portion of the second case 220_ch and the partial front side 410_ch2_fr of the third plate header 410_ch2he and/or between the side portion of the second case 220_ch and the partial lateral side 410_ch2_sd of the third plate header 410_ch2he.

The third-type display covers 302 may be integrated with the first case side portion 220_sd1 and the second case side portion 220_sd2, respectively. For example, at least a portion of the third-type display cover 302 may be integrated with the inner surface (e.g., the lateral surface observed in the -Z-axis direction) of the first case side portion 220_sd1 (or, the second case side portion 220_sd2) through pressure and heat greater than or equal to a specified magnitude. Alternatively, the third-type display cover 302 may be bonded to the inner surface of the first case side portion 220_sd1 (or, the second case side portion 220_sd2). The third-type display cover 302 may have a structure that is the same as or similar to the structure of the first-type display cover 300 described above with reference to FIG. 4. For example, the third-type display covers 302 may have a smooth outer surface, excluding the structure of the slide fixing part 300_pr2 described above with reference to FIG. 5.

Referring to state 903 and state 905, the modified deco 250_ch in which the third-type display cover 302 and the second case 220_ch are integrated with each other may be coupled with a portion of the third-type first housing 410_ch2. For example, the third-type display cover 302 may be coupled by a method that is the same as or similar to the method by which the first-type display cover 300 and the first-type first housing 410 described above with reference to FIG. 4 are coupled. In this regard, the third-type first housing 410_ch2 may include a bottom portion 410_1 and a side portion 410_2, and the side portion 410_2 may include an upper side portion 410_2a and a lower side portion 410_2b. Additionally, the side portion 410_2 may include a mounting portion 410_2crc on which one side of the second case 220_ch is mounted. The mounting portion 410_2crc may have an engraved rail groove shape when observed in the Z-axis direction and may be formed to have a length corresponding to the length of the first case side portion 220_sd1 of the second case 220_ch in the Y-axis direction. Similarly to the first-type display cover 300 described above with reference to FIG. 4, the third-type display cover 302 may include a first cover body 302_bd1 fastened to a first cover groove 410_2gr formed on the upper side portion 410_2a, a second cover body 302_bd2, at least a portion of which is disposed on a cover step 410_2st formed on the upper side portion 410_2a, a connecting portion 302_ex connecting the first cover body 302_bd1 and the second cover body 302_bd2, and a cover portion 302_pr1 extending from the second cover body 302_bd2 toward the X-axis edge of the display assembly 360 (or, the display 260 of FIG. 3) that is exposed to the outside. The first case side portion 220_sd1 (or, the second case side portion 220_sd2) of the second case 220_ch may further include a modified rail 220_r1 protruding in the -Z-axis direction so as to be mounted on the mounting portion 410_2crc formed on the third-type first housing 410_ch2. When the first case side portion 220_sd1 (or, the second case side portion 220_sd2) is coupled with the third-type display cover 302, at least a portion of the inner surface may be deformed into a shape corresponding to the shape of the outer surface of the third-type display cover 302.

In relation to the formation of the modified deco 250_ch described above, the third-type display cover 302 may be formed by performing insert molding with the second case 220_ch. The mounting portion 410_2crc of the third-type first housing 410_ch2 may prevent the side of the modified deco 250_ch from being open. The adhesive member 510 facilitates fixing the modified deco 250_ch to the third-type first housing 410_ch2 or disassembling the modified deco 250_ch from the third-type first housing 410_ch2.

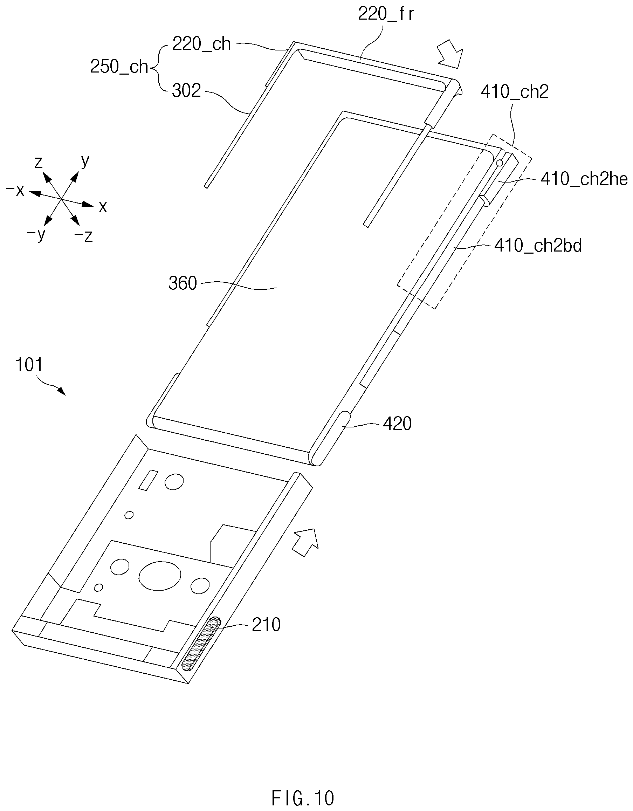

FIG. 10 is a view illustrating an assembly method of an electronic device including a third-type first housing according to an embodiment of the disclosure.

Referring to FIGS. 2 to 10, the electronic device 101 may include the third-type first housing 410_ch2, the second housing 420, the display assembly 360, the first case 210, and the modified deco 250_ch. The modified deco 250_ch may include a form in which the second case 220_ch and the third-type display cover 302 described above with reference to FIG. 9 are integrated with each other. In relation to the configuration of the electronic device 101, undescribed components in FIG. 10 among the components described above with reference to FIG. 3 may be further added. For example, the electronic device 101 may further include the battery, the printed circuit board, and the rear cover disposed inside the second housing 420.

At least a portion of the display assembly 360 may be placed on the front side (e.g., the side facing in the Z-axis direction) of the third-type first housing 410_ch2. According to various embodiments of the disclosure, a portion of the display assembly 360 may be disposed on the front side of the third-type first housing 410_ch2, and the remaining portion of the display assembly 360 may be disposed on the rear side of the third-type first housing 410_ch2 (or, the rear side of the second housing 420) and the curved area 421 of the second housing 420. The front side of the third-type first housing 410_ch2 may include sidewalls that protrude to surround a portion of the display assembly 360, or a portion of the third-type first housing 410_ch2 on which a portion of the display assembly 360 is placed may include a shape recessed when compared to the surrounding portion. The modified deco 250_ch, in which the second case 220_ch and the third-type display cover 302 are integrated with each other, may be fastened to the upper end (e.g., the Y-axis edge) of the third-type first housing 410_ch2. As described above with reference to FIG. 9, the third-type display cover 302 may have a structure that is the same as or similar to the structure of the first-type display cover 300 described above with reference to FIG. 4. Correspondingly, the modified deco 250_ch may be coupled to the third-type first housing 410_ch2 in the -Z-axis direction from the Z-axis direction as illustrated. However, the modified deco 250_c may be inserted into and coupled to the Y-axis edge of the third-type first housing 410_ch2 in the -Y-axis direction as described with reference to FIG. 6. For example, the first case side portion 220_sd1 integrated with the third-type display cover 302 may be fastened to the right side portion (e.g., the X-axis edge portion of the third plate header 410_ch2he) of the third-type first housing 410_ch2, and the second case side portion 220_sd2 integrated with the third-type display cover 302 may be fastened to the left side portion (e.g., the -X-axis edge portion of the third plate header 410_ch2he) of the third-type first housing 410_ch2. In the process in which the first case side portion 220_sd1 and the second case side portion 220_sd2 are fastened to the third plate header 410_ch2he, the third-type display covers 302 may be partially fastened to the cover groove and the cover step that are formed on the third plate header 410_ch2he and the third plate body 410_ch2bd. According to an embodiment of the disclosure, the adhesive member 510 may be disposed on the inner side of the housing upper end portion 220_fr of the second case 220_ch of the modified deco 250_ch, and in the process in which the modified deco 250_ch is coupled with the third-type first housing 410_ch2, the adhesive member 510 may bond the housing upper end portion 220_fr and the upper end of the third-type first housing 410_ch2 to each other.

In the state in which the third-type display covers 302 are coupled with the third-type first housing 410_ch2, the first case 210 may be inserted (or, slidably assembled) in the Y-axis direction from the -Y-axis direction and may be coupled with the third-type first housing 410_ch2. For example, the first case 210 may be disposed to cover at least a portion of opposite edges (e.g., the edges in the X-axis direction and the -X-axis direction) of the display assembly 360 and may be disposed to cover at least a portion of an end (e.g., the end in the -Y-axis direction) of the third-type display cover 302. The first case 210 may be disposed to surround the curved surface of the display assembly 360 (or, the curved portion of the display assembly 360 located on the curved area 421 of the second housing 420 of FIG. 3), and the curved surface of the display assembly 360 and the first case 210 may be spaced apart from each other at a certain interval in relation to the retraction or extension of the display assembly 360.

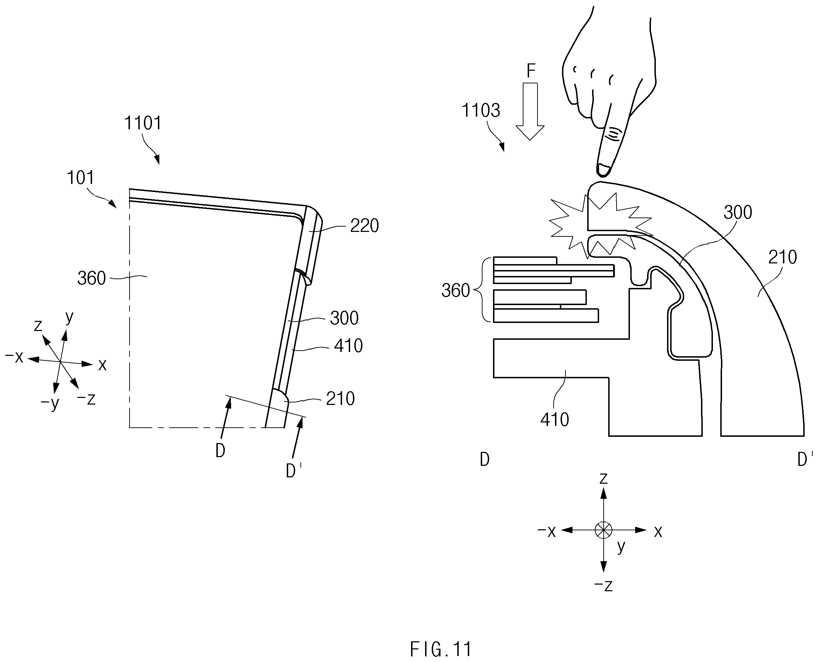

FIG. 11 is a view related to a display protection function in an extended position of an electronic device according to an embodiment of the disclosure. Referring to FIG. 11, state 1101 represents the extended position in which the first case 210 and the second case 220 of the electronic device 101 are spaced apart from each other at a specified interval, and state 1103 is a sectional view of the electronic device 101 taken along line D-D' in state 1101.

Referring to state 1101 of FIG. 11 in addition to at least one of FIGS. 2 to 10, the electronic device 101 may include the first case 210, the second case 220, and the first-type first housing 410 disposed to surround the edge of a portion of the display assembly 360 (or, the display 260 of FIG. 3) and may include the first-type display cover 300 disposed between the first case 210 and the second case 220. The first-type first housing 410, the first case 210, and the first-type display cover 300 may include structures that are the same as or similar to those of the first-type first housing, the first case, and the first-type display cover described above with reference to FIG. 4. Alternatively, the first-type first housing 410 and the first-type display cover 300 may be replaced with other types of first housings and display covers described with reference to FIGS. 8, 9, and 10.

In the extended position of the electronic device 101, the first-type display cover 300 may be disposed to cover a side edge of a portion of the display assembly 360 (or, the display 260 of FIG. 3) in the situation where the first case 210 and the second case 220 are spaced apart from each other at a specified interval or more and the side edge of the portion of the display assembly 360 is partially exposed to the outside. When observed in the Z-axis direction, the Z-axis heights of the first case 210 and the second case 220 may be different from the Z-axis height of the first-type display cover 300. For example, the Z-axis protruding height of the first-type display cover 300 may be lower than the Z-axis height of the first case 210 or the second case 220.

Referring to state 1103, in the electronic device 101 having the above-described structure, even though external pressure F is applied to an upper end of one side of the first case 210 (or, an upper end of one side of the second case 220), the first-type display cover 300 may resist the external pressure together with the first case 210 (or, the second case 220), and thus damage to an edge portion of the display panel 260_3 may be prevented. For example, in the extended position, the electronic device 101 may prevent dent damage due to pressing or damage due to tearing that occurs when an end of one edge of a portion of the display assembly 360 (or, the display 260 of FIG. 3) is exposed, by using the first-type display cover 300. In addition, the first-type display cover 300 and the first-type first housing 410 may employ a coupled structure of a groove and a rail, thereby providing an effect of reducing material costs required for coupling without using a coupling member such as bonding or screws.

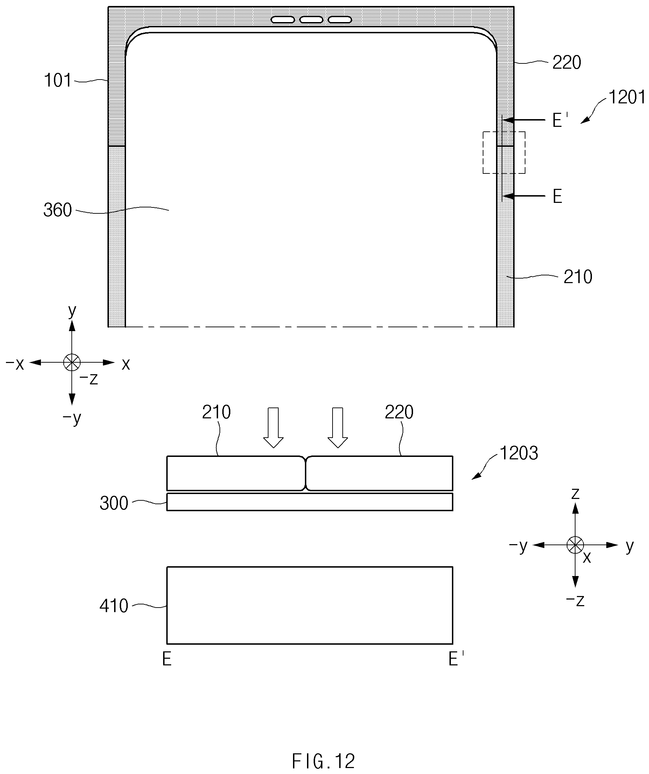

FIG. 12 is a view related to a display protection function in a retracted position of an electronic device according to an embodiment of the disclosure. Referring to FIG. 12, state 1201 represents the retracted position in which the interval between the first case 210 and the second case 220 of the electronic device 101 is less than a specified interval, and state 1203 is a sectional view of the electronic device 101 taken along line E-E' in state 1201.

Referring to state 1201 of FIG. 12 in addition to at least one of FIGS. 2 to 11, the electronic device 101 may include the first case 210 and the second case 220 disposed to surround an edge of a portion of the display assembly 360. The electronic device 101 may further include the first-type display cover 300 covered by the first case 210 and the second case 220 and the first-type first housing 410 supporting the first-type display cover 300. In addition, the electronic device 101 may further include at least some of the components of the electronic device 101 described above with reference to FIG. 3.

Referring to state 1203, the first-type display cover 300 and at least a part of the first-type first housing 410 may be disposed under (e.g., under in the -Z-axis direction) a portion of the first case 210 and a portion of the second case 220 of the electronic device 101. As described above with reference to FIG. 4, a portion of the first-type display cover 300 (e.g., the first cover portion 300_pr1 of FIG. 4) may be disposed to cover opposite edges of a portion of the display assembly 360 (or, the display 260 of FIG. 3), may be disposed under (or, below) the first case 210 and the second case 220, and may support the first case 210 and the second case 220. Accordingly, even though an external impact is applied to adjacent portions of the first case 210 and the second case 220 of the electronic device 101 in the retracted position, the applied impact may be dispersed by the first-type display cover 300, and thus opposite edges of at least a portion of the display assembly 360 (or, the display 260 of FIG. 3) may be prevented from being deformed or damaged.

According to the above-described various embodiments of the disclosure, an electronic device according to an embodiment may include a housing including a first housing 410 and a second housing 420 that movably engages with the first housing between a retracted position and an extended position, a display 260 coupled to the first housing and the second housing such that a size of an area of the display visible from a front side of the housing varies as the housing moves between the retracted position and the extended position, a display cover 300 coupled with the first housing and disposed to cover at least a portion of one edge of the display, and a first case 210 disposed on one side of the housing. In the retracted position, at least a portion of the display cover may be covered by the first case, and in the extended position, the at least a portion of the display cover covered by the first case may be exposed. Additionally or alternatively, the electronic device may further include a second case 220 disposed on an opposite side of the housing, and the display cover may be partially covered by the second case.

In another case, in the retracted position, the display cover 300 may be covered as much as a first portion by the first case or the second case, and in the extended position, the display cover 300 may be covered as much as a second portion smaller than the first portion by the first case or the second case.

In yet another case, in the extended position, the display cover 300 may be exposed as much as a third portion by the separation of the first case or the second case, and in the retracted position, the display cover 300 may be exposed as much as a fourth portion smaller than the third portion by the first case or the second case or may be covered so as not to be observed from the outside.

In yet another case, when observed in a lateral direction parallel to the front side of the display 260 (or, a display assembly 360 exposed to the outside), in the retracted position, the first housing 410 and the display cover 300 may be covered by the first case or the second case (or, may be exposed as much as a first portion through a gap smaller than a specified size), and in the extended position, the first housing 410 and the display cover 300 may be simultaneously exposed as much as a second portion (e.g., a size larger than the first portion) in correspondence to the separation distance of the first case or the second case.

The display may include an extended portion exposed in the extended position and covered in the retracted position and a fixed portion connected to the extended portion and fixedly (or constantly, or remain) exposed.

According to an embodiment of the disclosure, the display cover may include a cover portion disposed to overlap a side edge of the display area located between the first case and the second case in the extended position.

According to an embodiment of the disclosure, the display cover may further include a slide fixing part 300_pr2 that protrudes from an outer surface of the display cover toward the second case.

According to an embodiment of the disclosure, the second case may further include a cover fixing groove 220_rc corresponding to the slide fixing part.

According to an embodiment of the disclosure, the display cover may further include a first cover body fastened to a cover groove formed on the first housing and formed on a lateral side of the display with respect to a direction parallel to the front side of the display. According to an embodiment of the disclosure, the display cover may include a second cover body and a connecting portion. The second cover body may be disposed on a cover step formed on the first housing and formed in a direction viewed from the front side of the display and may be connected with the cover portion, and the connecting portion may connect the first cover body and the second cover body.

According to an embodiment of the disclosure, the display cover may include a cavity that is open at one side based on the first cover body, the second cover body, and the connecting portion.

According to an embodiment of the disclosure, the display cover may have a length longer than a separation distance between the first case and the second case in the extended position.

According to an embodiment of the disclosure, one end of the display cover may be disposed to overlap the first case, and an opposite end of the display cover may be disposed to overlap the second case.

According to an embodiment of the disclosure, the display cover may include a protruding portion that protrudes from an inner surface of the display cover toward an upper end of a side portion of the first housing.

According to an embodiment of the disclosure, a curvature of an outer surface of the display cover may be the same as or similar to a curvature of an inner surface of the first case.

According to an embodiment of the disclosure, the electronic device may further include an adhesive member disposed between an outer surface of the display cover and the first case.

According to an embodiment of the disclosure, a portion of the display cover and a portion of the second case may be integrated with each other.

According to an embodiment of the disclosure, the electronic device may further include an adhesive member disposed between the second case and one side of the first housing.

According to an embodiment of the disclosure, one end of the first case or the second case and one end of the display cover may be aligned with each other with respect to a direction viewed from a front side of the display.

According to an embodiment of the disclosure, one end of the first case or the second case may protrude further toward the display than one end of the display cover with respect to a direction viewed from a front side of the display.

According to an embodiment of the disclosure, the display may include a window and a display panel disposed under the window, and with respect to a direction viewed from a front side of the display, the display cover may not overlap an edge of the window and may overlap an edge of the display panel.

According to an embodiment of the disclosure, materials of the display cover and the second case may be different from each other.

According to an embodiment of the disclosure, materials of the display cover and the first housing may be different from each other.

According to an embodiment of the disclosure, the electronic device may further include another display cover disposed to cover at least a portion of an opposite edge of the display.

It should be appreciated that embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

According to the situation, the expression "adapted to or configured to" used in this disclosure may be used interchangeably with, for example, the expression "suitable for", "having the capacity to", "adapted to", "made to", "capable of", or "designed to" in hardware or software. The expression "a device configured to" may mean that the device is "capable of" operating together with another device or other components. For example, a "processor set to (or configured to) perform A, B, and C" may mean a dedicated processor (e.g., an embedded processor) for performing corresponding operations or a generic-purpose processor (e.g., a CPU or an AP) that performs corresponding operations by executing one or more programs stored in memory device (e.g., memory).

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. The "module" may be implemented mechanically or electronically and may include, for example, an application-specific integrated circuit (ASIC) chip, field-programmable gate arrays (FPGAs), or a programmable-logic device for performing some operations, which are known or will be developed.

At least a part of an apparatus (e.g., modules or functions thereof) or a method (e.g., operations) according to various embodiments may be implemented by instructions stored in computer-readable storage media (e.g., the memory 130) in the form of a program module. The instructions, when executed by a processor (e.g., the processor 120), may cause the processor to perform functions corresponding to the instructions. The computer-readable storage media may include a hard disk, a floppy disk, a magnetic media (e.g., a magnetic tape), an optical media (e.g., CD-ROM, DVD, magneto-optical media (e.g., a floptical disk)), embedded memory, and the like. The instructions may include a code made by a compiler or a code executable by an interpreter.

According to embodiments of the disclosure, each component (e.g., a module or a program) of the above-described components may include a single entity or multiple entities, and some of the multiple entities may be separately disposed in different components. According to embodiments of the disclosure, one or more of the above-described components may be omitted, or one or more other components may be added. Alternatively or additionally, a plurality of components (e.g., modules or programs) may be integrated into a single component. In such a case, according to various embodiments of the disclosure, the integrated component may still perform one or more functions of each of the plurality of components in the same or similar manner as they are performed by a corresponding one of the plurality of components before the integration. According to various embodiments of the disclosure, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a housing including a first housing and a second housing configured to movably engage with the first housing between a retracted position and an extended position;
a display coupled to the first housing and the second housing such that a size of an area of the display visible from a front side of the housing varies as the housing moves between the retracted position and the extended position, the display including an extended portion exposed in the extended position and covered in the retracted position and a fixed portion connected to the extended portion and fixedly exposed;
a display cover coupled with the first housing and disposed to cover at least a portion of one edge of the display; and
a first case disposed on one side of the housing,
wherein in the retracted position, at least a portion of the display cover is covered by the first case, and in the extended position, the at least a portion of the display cover covered by the first case is exposed.

2. The electronic device of claim 1, further comprising:
a second case disposed on an opposite side of the housing,
wherein the display cover includes a cover portion disposed to overlap at least a portion of a side edge of a display area corresponding to a location between the first case and the second case among entire areas of the display in the extended position.

3. The electronic device of claim 2, wherein the display cover further includes a slide fixing part configured to protrude from an outer surface of the display cover toward the second case.

4. The electronic device of claim 3, wherein the second case includes a cover fixing groove corresponding to the slide fixing part.

5. The electronic device of claim 2, wherein the display cover further includes a first cover body fastened to a cover groove formed on the first housing.

6. The electronic device of claim 5, wherein the display cover further includes:
a second cover body disposed on a cover step formed on the first housing and connected with the cover portion;
a connecting portion configured to connect the first cover body and the second cover body; and
a cavity formed based on the first cover body, the second cover body, and the connecting portion, the cavity being open at one side.

7. The electronic device of claim 1, further comprising:
a second case disposed on an opposite side of the housing,
wherein the display cover has a length longer than a separation distance between the first case and the second case in the extended position,
wherein one end of the display cover is disposed to overlap the first case, and
wherein an opposite end of the display cover is disposed to overlap the second case.

8. The electronic device of claim 1, wherein the display cover includes a protruding portion configured to protrude from an inner surface of the display cover toward the first housing.

9. The electronic device of claim 1, wherein a curvature of an outer surface of the display cover is same as or similar to a curvature of an inner surface of the first case.

10. The electronic device of claim 1, further comprising:
an adhesive member disposed between an outer surface of the display cover and the first case.

11. The electronic device of claim 1, further comprising:
a second case disposed on an opposite side of the housing,
wherein a portion of the display cover and a portion of the second case are integrated with each other.

12. The electronic device of claim 1, further comprising:
a second case disposed on an opposite side of the housing; and
an adhesive member disposed between the second case and one side of the first housing.

13. The electronic device of claim 1, wherein one end of the first case and one end of the display cover are aligned with each other with respect to a direction viewed from a front side of the display.

14. The electronic device of claim 1, further comprising:
a second case disposed on an opposite side of the housing,
wherein one end of the second case and one end of the display cover are aligned with each other with respect to a direction viewed from a front side of the display.

15. The electronic device of claim 1,
wherein the display includes:
a window, and
a display panel disposed under the window, and
wherein with respect to a direction viewed from a front side of the display, the display cover does not overlap an edge of the window and overlaps an edge of the display panel.
